(19) Europäisches Patentamt

European Patent Office

Office européen des brevets

(11) **EP 0 895 683 B1**

## (12) EUROPÄISCHE PATENTSCHRIFT

(45) Veröffentlichungstag und Bekanntmachung des Hinweises auf die Patenterteilung:
**15.03.2000  Patentblatt 2000/11**

(21) Anmeldenummer: **97921628.0**

(22) Anmeldetag: **24.04.1997**

(51) Int Cl.7: **H04L 27/26**

(86) Internationale Anmeldenummer:
**PCT/DE97/00846**

(87) Internationale Veröffentlichungsnummer:
**WO 97/41647 (06.11.1997 Gazette 1997/47)**

(54) **SYSTEM ZUR FUNKÜBERTRAGUNG DIGITALER SIGNALE ZWISCHEN MEHREREN TEILNEHMERSTATIONEN UND EINER BASISSTATION**

SYSTEM FOR RADIO TRANSMISSION OF DIGITAL SIGNALS BETWEEN A PLURALITY OF SUBSCRIBER STATIONS AND A BASE STATION

SYSTEME POUR LA TRANSMISSION RADIO DE SIGNAUX NUMERIQUES ENTRE PLUSIEURS STATIONS D'ABONNES ET UNE STATION DE BASE

(84) Benannte Vertragsstaaten:
**DE FR GB IT**

(30) Priorität: **26.04.1996  DE 19616829**

(43) Veröffentlichungstag der Anmeldung:
**10.02.1999  Patentblatt 1999/06**

(73) Patentinhaber: **SIEMENS AKTIENGESELLSCHAFT**
**80333 München (DE)**

(72) Erfinder:
- **JUNG, Peter**
  **D-67697 Otterberg (DE)**
- **BERENS, Friedbert**
  **D-67663 Kaiserslautern (DE)**
- **BAIER, Paul-Walter**
  **D-67661 Kaiserslautern (DE)**
- **PLECHINGER, Jörg**
  **D-81541 München (DE)**
- **KAMMERLANDER, Karl**
  **D-82515 Wolfratshausen (DE)**

(56) Entgegenhaltungen:
**US-A- 5 504 775**

- **FETTWEIS G ET AL: "On multi-carrier code division multiple access (MC-CDMA) modem design" VTC 1994. 'CREATING TOMORROW'S MOBILE SYSTEMS'. 1994 IEEE 44TH VEHICULAR TECHNOLOGY CONFERENCE (CAT. NO.94CH3438-9), PROCEEDINGS OF IEEE VEHICULAR TECHNOLOGY CONFERENCE (VTC), STOCKHOLM, SWEDEN, 8-10 JUNE 1994, ISBN 0-7803-1927-3, 1994, NEW YORK, NY, USA, IEEE, USA, Seiten 1670-1674 vol.3, XP000497706**
- **YEE N ET AL: "Controlled equalization of multi-carrier CDMA in an indoor Rician fading channel" VTC 1994. 'CREATING TOMORROW'S MOBILE SYSTEMS'. 1994 IEEE 44TH VEHICULAR TECHNOLOGY CONFERENCE (CAT. NO.94CH3438-9), PROCEEDINGS OF IEEE VEHICULAR TECHNOLOGY CONFERENCE (VTC), STOCKHOLM, SWEDEN, 8-10 JUNE 1994, ISBN 0-7803-1927-3, 1994, NEW YORK, NY, USA, IEEE, USA, Seiten 1665-1669 vol.3, XP002039639**

**Beschreibung**

Die Erfindung bezieht sich auf ein System gemäß dem Oberbegriff des Patentanspruchs 1.

In vielen Funkübertragungssystemen, insbesondere in modernen Mobilfunksystemen, müssen wegen des beschränkten Frequenzvorrats die zugeteilten Frequenzbänder so effizient wie möglich ausgenutzt werden. Darüber hinaus müssen Funkübertragungssysteme, insbesondere mobiler Art, so ausgelegt werden, daß eine gegenseitige Störung so minimal ist, daß sie nebeneinander betrieben werden können. Insbesondere in mobilen Funksystemen bestehen zwei weitere größere Schwierigkeiten, nämlich zum einen das Problem des Vielfachzugriffs (MA = Multiple Access), das wegen der gleichzeitigen Übertragung von mehreren Signalen, die jeweils aktiven, den gleichen HF-Träger verwendenden Teilnehmern zugeordnet sind, entsteht, und zum anderen das Entzerrungsproblem, das aufgrund der Frequenzselektivität des Funkkanals entsteht. Codemultiplexbetrieb, auch als CDMA (Code Division Multiple Access) bezeichnet, ist eine bekannte und günstige Lösung des Vielfachzugriffsproblems. In CDMA-Funksystemen senden mehrere Teilnehmer ihre Teilnehmersignale in einem gemeinsamen HF-Frequenzband über einen zeitvarianten und frequenzselektiven Funkkanal. Es können jedoch zwischen den gleichzeitig übertragenen Signalen zeitvariante gegenseitige Störungen auftreten, die als Vielfachzugriffinterferenzen (MAI, Multiple Access Interference) bezeichnet werden und sich durch geeignete Signaltrenntechniken abmildern lassen. Außerdem können bei CDMA-Funksystemen auch zeitvariante Intersymbolinterferenzen (ISI, Intersymbol Interference) zwischen den Datensymbolen, die nacheinander von einem spezifischen Teilnehmer übertragen werden, auftreten. Das im Empfänger entstehende Signalgemisch kann durch Einzelteilnehmerdetektion ausgewertet oder vorteilhaft durch Algorithmen zur Mehrteilnehmerdetektion getrennt werden. Dieses Trennen ist im Hinblick auf die Realisierung von CDMA-Systemen insbesondere im terrestrischen Mobilfunk von Vorteil, weil auf aufwendige Verfahren zur Leistungsregelung und zum weichen Weiterreichen (Soft Handover) verzichtet werden kann. Außerdem ist der Diversitätsempfang (Diversity), beispielsweise durch den Einsatz mehrerer Empfangsantennen (Antennendiversity), vorteilhaft, da dadurch die Übertragungsqualität verbessert werden kann. CDMA-Systeme mit direkter Codespreizung (DS, Direct Sequence), Diversitätsempfang und Mehrteilnehmerdetektion sind bekannt. Eine vorteilhafte und bei DS-CDMA-Systemen erfolgreich angewandte Methode zur Mehrteilnehmerdetekion ist das sogenannte JD(Joint Detection = Gemeinsame Detektion)Verfahren, das z.B. im Aufsatz von P.Jung, B.Steiner: "Konzept eines CDMA-Mobilfunksystems mit gemeinsamer Detektion für die dritte Mobilfunkgeneration", Teile 1 und 2, "Nachrichtentech., Elektron., SCIENCE, Berlin 45 (1995) 1, Seiten 10 bis 14 und 2, Seiten 24 bis 27 beschrieben ist. Ein wichtiger Vorteil solcher CDMA-Systeme ist das Ausnutzen von Frequenzdiversität und Interferenzdiversität. Nachteilig bei DS-CDMA-Systemen ist der geringe Einfluß auf die Einteilung und Zuweisung der Frequenzresssource. Eine Verbindung von CDMA-Systemen mit Mehrträgerverfahren (MC, Multicarrier) räumt diesen Nachteil aus.

Mehrträger-Übertragungsverfahren haben ihren Ursprung in der orthogonalen Frequenzmultiplextechnik (OFDM, Orthogonal Frequency Division Multiplexing). Bei OFDM ist die einem besonderen Teilnehmer $k$ zugewiesene Trägerbandbreite $B_U$ in $Q_T$ nebeneinander liegende Subträger mit gleicher Bandbreite $B_S$ aufgeteilt. Somit ergibt sich:

$$B_U = Q_T \cdot B_S . \tag{1}$$

Zur Ermöglichung sich überlappender Subträger, die gegenüber der Datensymbolperiode $T_S$ orthogonal sind, wird die Bandbreite $B_S$ gleich $1/T_S$ gewählt. Orthogonale Subträger erleichtern den Einsatz einfach aufgebauter Empfänger. Im folgenden wird davon ausgegangen, daß $k$ Teilnehmer $N$ $m$-äre komplexe Datensymbole $\underline{d}_n(k)$, $n$=1...$N$, innerhalb der Zeitdauer $T_{bu}$ übertragen. Die Datensymbole $\underline{d}_n^{(k)}$, $n$=1...$N$, werden aus dem komplexen Satz

$$\underline{V} = \{\underline{v}_1, \underline{v}_2 ... \underline{v}_m\}, \quad \underline{v}_\mu \in C, \quad \mu = 1...m, \quad m \in \mathbb{N} \tag{2}$$

entnommen. Die Übertragung findet über den HF-Träger mit der in Gleichung (1) angegebenen Bandbreite $B_U$ statt. Bei OFDM gilt:

$$Q_T = N . \tag{3}$$

Jedes Datensymbol $\underline{d}_n^{(k)}$ ist dabei einem besonderen Subträger zugewiesen. Deswegen werden alle Datensymbole $\underline{d}_n^{(k)}$ gleichzeitig während der vorher erwähnten Zeitdauer $T_{bu}$ übertragen. Die Symbolperiode $T_S$ ist bei OFDM somit gleich der Zeitdauer $T_{bu}$.

Die Energie von MC-CDMA-Signalen ist spektral sehr gut auf den zugewiesenen HF-Träger mit der Bandbreite $B_u$ beschränkt, was auf die Verwandtschaft mit OFDM zurückzuführen ist. Somit ist eine Nachbarkanalstörung sehr gering. Im Hinblick auf die Systemkoexistenz ist dieser Sachverhalt vorteilhaft. Darüber hinaus sind die Spektren von MC-CDMA-Signalen im Band $B_u$ ziemlich weiß, was hinsichtlich des Ausgleichs und der Detektion günstig ist. Die von jedem Subträger erfahrenen Schwunderscheinungen sind weitgehend frequenzunselektiv, weil die Bandbreite jedes Subträgers $B_S$ gewöhnlich schmaler als die Kohärenzbandbreite $B_C$ eines Mobilfunkkanals ist. Diese Frequenzunselektivität in Verbindung mit der Orthogonalität der Subträger gestattet die Anwendung einfacher suboptimaler Detektoren bei MC-CDMA.

Da bei OFDM ein Datensymbol $\underline{d}_n^{(k)}$ einem einzigen Subträger zugeordnet ist, hat OFDM ein geringes Frequenzdiversitätsvermögen. Bei MC-CDMA wird dagegen ein Datensymbol $\underline{d}_n^{(k)}$ über $Q$ Subträger gleichzeitig übertragen, $1<Q\leq Q_T$, was eine gute Frequenzdiversitätsausnutzung ermöglicht. Wenn Frequenzlücken zwischen die $Q$ Subträger eingeführt werden, denen ein besonderes Datensymbol $\underline{d}_n^{(k)}$ zugeteilt ist, läßt sich das Frquenzdiversitätsverhalten leicht einrichten, was die Systemflexibilität zusätzlich erhöht. Beispielsweise lassen sich anderen Datensymbolen $\underline{d}_n^{(k)}$, $n'\neq n$, zugeordnete Subträger in den Frequenzlücken zwischen den vorher erwähnten $Q$ Subträgern zuweisen. Die Technik der Frequenzdiversität wird im folgenden nicht weiter betrachtet. Anstelle davon wird vorausgesetzt, daß alle einem spezifischen Datensymbol $\underline{d}_n^{(k)}$ zugeordneten $Q$ Subträger benachbart sind, was immer noch die Ausnutzung von Frequenzdiversität erlaubt, sofern Vorsorge getroffen ist, daß $Q \cdot B_S$ die Kohärenzbandbreite $B_C$ übersteigt. MC-CDMA ist auch bei Interferenzdiversität von Nutzen, weil $K>1$ Teilnehmer gleichzeitig aktiv die gleichen $Q$ Subträger benutzen. Interferenzdiversität ist das Schlüsselmerkmal zur Erzielung einer hohen Spektralwirksamkeit $\eta$.

Bisherige Systemkonzepte für CDMA-Systeme mit Mehrträgerverfahren (MC) sind nicht für den generellen Einsatz bei Mobilfunk geeignet. Strukturen für CDMA-Systeme mit Mehrträgerverfahren (MC) existieren bisher nur für Umgebungen mit geringer Zeitvarianz und vernachlässigbarer Intersymbolinterferenz. Algorithmen zur Mehrteilnehmerdetektion wurden bisher nur für die Abwärts strecke (von der Basisstation zu den Teilnehmerstationen hin) vorgeschlagen und untersucht. Für die wenig betrachtete, weil aufwendigere Aufwärtsstrecke (von den Teilnehmerstationen zur Basisstation hin) wurden bisher nur konventionelle Einzelteilnehmerdetektoren vorgeschlagen und untersucht. Diversitätsempfang, z.B. kohärente Empfangsantennen-Diversität (CRAD = coherent receiver antenna diversity), in solchen CDMA-Systemen mit Mehrträgerverfahren wurde bislang noch nicht untersucht.

Die Beziehung zwischen der Anzahl $Q_T$ der insgesamt über das HF-Frequenzband $B_u$ vorhandenen Subträger und der Anzahl $Q$ der einem besonderen Datensymbol $\underline{d}_n^{(k)}$ zugeordneten Subträger lautet bei MC-CDMA

$$Q_T = Q \cdot N_S. \qquad (4)$$

In der Gleichung (4) bedeutet $N_S$ die Anzahl von gleichzeitig von einem Teilnehmer $k$ übertragenen Datensymbolen $\underline{d}_n^{(k)}$. Die Datensymbolperiodendauer beträgt somit

$$T_S = \frac{T_{bu}}{N} \cdot N_S. \qquad (5)$$

Für gegebene $B_u$ und $T_{bu}$ hängt ein MC-CDMA Systemkonzept von der Wahl von $Q$ und $N_S$ ab.

Unterschiedliche Auswahlen von $Q$ und $N_S$ führen zu möglichen MC-CDMA-Konzepten mit besonderen Merkmalen. Bei einem bekannten möglichen MC-CDMA-Konzept ist $N_S=N$, was bedeutet, daß alle Datensymbole $\underline{d}_n^{(k)}$ gleichzeitig übertragen werden. Außerdem gelten bei diesem bekannten Konzept $B_S=B_u/(Q\cdot N)$ und $T_S=T_{bu}$. Gemäß einer Reihe von Untersuchungen über MC-CDMA erleichtert dieses bekannte Konzept das vorteilhafte Vermeiden von zeitvariablen Intersymbolinterferenzen durch Einführung von Schutzintervallen der Periodendauer $T_g>T_M$ ($T_M$ = Dauer der Kanalimpulsantwort). Jedoch ist die Einführung von Schutzintervallen nur einigermaßen brauchbar, wenn $T_S>>T_g$. In mobilen Funkumgebungen liegt die Dauer $T_M$ der Kanalimpulsantwort in der Größenordnung von einigen Mikrosekunden bis zu einigen zehn Mikrosekunden, was eine Datensymbolperiodendauer von $T_S>100\mu s$ erfordert.

Der Erfindung liegt die Aufgabe zugrunde, inflexible CDMA-Systemstrukturen mit Mehrträgerverfahren durch eine flexiblere, für den Mobilfunk generell geeignete CDMA-Systemstruktur mit Mehrträgerverfahren zu ersetzen. Diese neue Systemstruktur soll die Kombination der spezifischen Vorteile von CDMA (Frequenzdiversität, Interferenzdiversität) mit dem Vorteil von Mehrträgerverfahren (flexible Zuweisung der Frequenzressource) erlauben und sowohl die Vielfchzugriffinterferenz (MAI) als auch die Intersymbolinterferenz (ISI) berücksichtigen. Diversitätsempfang soll explizit berücksichtigt werden. Außerdem sollen durch die durch die Erfindung angegebenen neuen Strukturen CDMA-Systeme mit DS (Direct Sequence) und mit Mehrträgerverfahren vereinheitlicht werden, was dann eine aufwandsgünstige Implementierung flexibler CDMA-Systeme und eine Vereinheitlichung der Signalerzeugung in CDMA-Systemen mit DS und mit Mehrträgerverfahren erlaubt. Außerdem sollen durch die Erfindung geeignete Algorithmen zur Mehrteilnehmerdetektion für die Anwendung in CDMA-Systemen mit Mehrträgerverfahren und Diversitätsempfang bereitgestellt werden. Diese Algorithmen sollen sowohl für die Aufwärtsstrecke als auch für die Abwärtsstrecke einsetzbar sein.

Diese Aufgabe wird bei einem gattungsgemäßen System durch die im kennzeichnenden Teil des Patentanspruchs 1 angegebenen Merkmale gelöst.

Beim CDMA-System nach der Erfindung beträgt die Anzahl $N_S$ der gleichzeitig von einem besonderen Teilnehmer $k$ übertragenen Datensymbole $\underline{d}_n^{(k)}$ eins. Daher werden alle Datensymbole $\underline{d}_n^{(k)}$ des Teilnehmers $k$ aufeinanderfolgend übertragen. Gemäß der Gleichung (4) gilt $Q_T=Q$, und die Bandbreite $B_S$ jedes Subträgers ist $N$-fach breiter als beim bekannten Konzept. Beim CDMA-Verfahren nach der Erfindung ist die Datensymbolperiodendauer $T_S$ gleich $T_{bu}/N$. Schutzintervalle zwischen aufeinanderfolgend übertragenen Datensymbolen $\underline{d}_n^{(k)}$ werden aus Wirtschaftlichkeitsgründen jedoch nicht eingeführt. Aufgrund des Verzichts auf solche Schutzintervalle werden zwar Intersymbolinterferenzen (ISI) verursacht, die aber durch die neuen Systemstrukturen nach der Erfindung genauso wie die Vielfachzugriffinterferenzen (MAI) berücksichtigt werden.

Wie bereits im Zusammenhang mit den Gleichungen (4) und (5) angegeben wurde, hängt die geeignete Wahl von $Q$ und $N_S$ von der Umgebung ab, in der MC-CDMA angewendet werden soll. Beispielsweise muß das jeweilige MC-CDMA-Systemkonzept in der Lage sein, in schnell zeitvarianten Mobilfunkumgebungen betrieben zu werden, die dann vorkommen, wenn Empfänger und Sender z.B. in Hochgeschwindigkeitszügen, Flugzeugen und Satelliten mit niedriger Umlaufbahn angeordnet sind. Die Korrelationszeit $T_k$ in solchen Mobilfunkumgebungen kann in der Größenordnung von nur einigen hundert Mikrosekunden liegen. Eine kohärente Detektion erfordert dann eine iterativ verbesserte Kanalschätzprozedur, die auf bereits detektierten Datensymbolen $\underline{d}_n^{(k)}$ beruht. Deswegen sollte die Datensymboldauer $T_S$ in Gleichung (5) erheblich kürzer als die minimale Korrelationszeit $T_K$ sein. Insbesondere sollte $T_S$ in der Größenordnung einiger Mikrosekunden oder höchstens einiger zehn Mikrosekunden liegen. Ist jedoch $T_S$ klein, dann müssen $Q_T$ und $N_S$ ebenfalls klein sein. Da das bekannte MC-CDMA-Systemkonzept ein ziemlich großes $T_S$ erfordert, ist dieses für eine Anwendung beim Mobilfunk von Nachteil. Das Konzept gemäß dem System nach der Erfindung erfüllt die vorstehend erwähnten Erfordernisse bezüglich $T_S$.

Zweckmäßige Weiterbildungen und Ausführungsmöglichkeiten sowie vorteilhafte Anwendungsgebiete des Systems nach der Erfindung sind in den Unteransprüchen angegeben.

Die Erfindung wird im folgenden anhand einer Figur erläutert. Vektoren werden dabei in kleinen fettgeschriebenen Buchstaben und Matrizen in großen fettgeschriebenen Buchstaben dargestellt. Komplexe Größen sind unterstrichen. Die Symbole $(\cdot)^*, (\cdot)^T, \|\ \|$ und $E\{\cdot\}$ stellen die komplexe Konjugation, die komplexe Transposition, die Bildung der Vektornorm bzw. die Erwartungswertbildung dar.

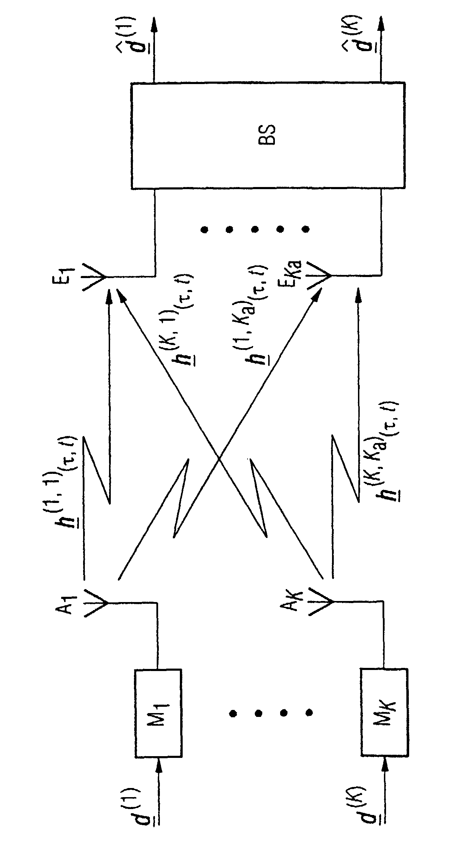

Die Figur zeigt die Blockstruktur einer Aufwärtsstrecke eines Mobilfunksytems mit kohärenter Empfangsantennen-Diversität.

Die durch die Erfindung entstandene CDMA-Systemstruktur mit Mehrträgerverfahren (MC) gleicht derjenigen eines CDMA-Systems mit DS (Direct Sequence). In der Blockstruktur nach der Figur sind $K$ mobile Teilnehmer $M_1...M_K$ auf dem gleichen HF-Träger mit der Bandbreite $B_u$ gleichzeitig aktiv. Jeder mobile Teilnehmer $M_1...M_K$ hat eine einzige Sendeantenne $A_1...A_k$. Die ausgesendeten Signale werden an $K_a$ Empfangsantennen $E_1...E_{K_a}$ in einem Basisstations-JD-Empfänger BS empfangen. Somit findet die Übertragung der $K$ Teilnehmersignale über $K \cdot K_a$ verschiedene Funkkanäle mit zeitvarianten komplexen Impulsantworten

$$\underline{h}^{(k,k_a)}(\tau, t), \quad k = 1...K, \quad k_a = 1...K_a, \quad K, K_a \in \mathbb{IN} \quad (6)$$

statt. Im Ausdruck (6) bezieht sich die Impulsantwort $\underline{h}^{(k,k_a)}(\tau,t)$ auf die Verbindung des Teilnehmers $k$ mit der Empfangsantenne $E_{k_a}$ auf der einen Seite und der Basisstation BS auf der anderen Seite. Im Ausdruck (6) bezeichnet $\tau$ den sich auf die Zeitspreizung, d.h. die Verzerrung, des übertragenen Signals aufgrund Mehrwegeempfang beziehenden Verzögerungsparameter und $t$ die sich auf die Zeitvariation des Funkkanals beziehende reale Zeit.

Im folgenden wird die Erzeugung der einem mobilen Teilnehmer $k$, $k=1...K$, zugeordneten MC-CDMA-Signale beschrieben. Die nun folgende mathematische Darstellung der MC-CDMA-Signale ist die Grundlage sowohl für die später noch beschriebene Diskretzeit-Modelldarstellung als auch für die ebenfalls später noch beschriebene besondere Mehrteilnehmerdetektion (JD = Joint Detection) mit Empfangsantennen-Diversität. Wie bereits ausgeführt wurde, sendet jeder Teilnehmer $k$ endliche Datensequenzen

$$\underline{d}^{(k)} = \left( \underline{d}_1^{(k)}, \underline{d}_2^{(k)} \ldots \underline{d}_N^{(k)} \right)^T, \quad \underline{d}_n^{(k)} \in \underline{V}, \quad \underline{V} \subset C, \quad k=1\ldots K, \quad n=1\ldots N,$$

$$K, \; N \in \mathbb{N} \qquad (7)$$

aus. Jede Datensequenz $\underline{d}^{(k)}$ besteht aus $N$ $m$-ären komplexen Datensymbolen $\underline{d}_n^{(k)}$ mit einer Datensymbolperiodendauer $T_S$. Die Datensymbole $\underline{d}_n^{(k)}$ werden aus einem endlichen komplexen Satz $\underline{V}$ gemäß dem Ausdruck (2) entnommen.

Die Übertragung findet unter Einsatz von $Q_T=Q$ Subträgern der Bandbreite $B_S=B_u/Q=1/T_S$ statt. Die $Q$ Subträger werden mit $q$, $q=1\ldots Q$, numeriert. Jeder Subträger $q$ hat eine einzige Mittenfrequenz $f_q$, $q=1\ldots Q$, die gemäß

$$f_q = \frac{q-1}{T_S}, \; q = 1\ldots Q \qquad (8)$$

gewählt wird. Entsprechend der Beziehung (8) hat der erste Subträger der Bandbreite $1/T_S$ die Mittenfrequenz $f_1=0$, der zweite Subträger der Bandbreite $1/T_S$ die Mittenfrequenz $f_2=1/T_S$, der dritte Subträger der Bandbreite $1/T_S$ die Mittenfrequenz $f_3=2/T_S$, und so fort.

Aus der Beziehung (8) folgt, daß die Mittenfrequenz des HF-Trägers mit der Bandbreite $B_u$

$$f_c = \frac{Q-1}{2 \cdot T_S} \neq 0 \qquad (9)$$

ist. Im äquivalenten Tiefpaßbereich, der in den folgenden Berechnungen betrachtet wird, ist die Mittenfrequenz $f_c$ des HF-Trägers also nicht gleich Null.

Die durch die Gleichung (8) gegebene Mittenfrequenz $f_q$ des Subträgers $q$, der durch die gewichtete komplexe Sinusoide

$$\left( 1 / \sqrt{Q} \right) \exp\{ j 2\pi f_q t \}$$

dargestellt wird, hat eine Phasenabweichung gleich $2 \cdot \pi \cdot (q-1)$ während der Datensymbolperiode $T_S$ zur Folge. Der Faktor

$$\left( 1 \sqrt{Q} \right) \; \text{in} \; \left( 1 / \sqrt{Q} \right) \exp\{ j 2\pi f_q t \}$$

wird zur Energienormali-sierung benötigt. Jedes Datensymbol $\underline{d}_n^{(k)}$, $n=1\ldots N$, eines Teilnehmers $k$ wird über alle $Q$ Subträger der Bandbreite $B_S=1/T_S$ durch Verwendung der benutzerspezifischen Signatursequenz

$$\underline{c}^{(k)} = \left( \underline{c}_1^{(k)}, \underline{c}_2^{(k)} \ldots \underline{c}_Q^{(k)} \right)^T, \quad \underline{c}_q^{(k)} \in \underline{V}_c, \quad \underline{V}_c \subset C, \quad k=1\ldots K, \quad q=1\ldots Q,$$

$$K, Q \in \mathbb{N}. \qquad (10)$$

gespreizt, um eine Koexistenz von $K$ gleichzeitig übertragenen Teilnehmersignalen auf dem gleichen Träger der Bandbreite $B_u$ zu gestatten. Die $\tilde{m}$-ären komplexen Signaturelemente $\underline{c}_q^{(k)}$ der Gleichung (10) werden als Chips bezeichnet. Die Chips $\underline{c}_q^{(k)}$ werden dem komplexen Satz

$$\underline{V}_c = \{ \underline{V}_{c,1}, \underline{V}_{c,2} \ldots \underline{V}_{c,\tilde{m}} \}, \quad \underline{V}_{c,\mu} \in C, \quad \mu=1\ldots\tilde{m}, \quad \tilde{m} \in \mathbb{N} \qquad (11)$$

entnommen. Jedes Chip $\underline{c}_q^{(k)}$, $q$=1...$Q$, ist einem besonderen Subträger $q$ zugeordnet. Dies bedeutet, daß das Chip $\underline{c}_1^{(k)}$ dem Subträger 1, das Chip $\underline{c}_2^{(k)}$ dem Subträger 2, das Chip $\underline{c}_3^{(k)}$ dem Subträger 3 usw. zugeordnet ist. Mit $f_q$ nach der Beziehung (8) ist die Spreizmodulation des Datensymbols $\underline{d}_n^{(k)}$ durch die zeitverzögerte Version $\underline{c}^{(k)}(t\text{-}[n\text{-}1]T_S;\underline{c}^{(k)})$ von

$$\underline{c}^{(k)}(t;\underline{c}^{(k)}) = \text{rect}\left\{\frac{t}{T_s} - \frac{1}{2}\right\} \cdot \frac{1}{\sqrt{Q}} \cdot \sum_{q=1}^{Q} \underline{c}_q^{(k)} \cdot \exp\left\{j2\pi f_q t\right\} \quad (12)$$

gegeben. Die Grundlage der Spreizmodulation ist daher ein Impuls $\underline{c}^{(k)}(t;\underline{c}^{(k)})$. Die Gestalt dieses Impulses $\underline{c}^{(k)}(t;\underline{c}^{(k)})$ ist von der Wahl der $Q$ in der Beziehung (8) gegebenen Mittenfrequenzen $f_q$ und von der teilnehmerspezifischen Signatursequenz $\underline{c}^{(k)}$ nach Gleichung (10) abhängig. Gemäß Gleichung (12) hat der Impuls $\underline{c}^{(k)}(t;\underline{c}^{(k)})$ die Länge $T_S$ und ist durch Überlagerung der komplexen Sinusoiden

$$\left(1/\sqrt{Q}\right)\exp\left\{j2\pi f_q t\right\},$$

$q$=1...$Q$, gegeben, die mit den Chips $\underline{c}_q^{(k)}$ nach Gleichung (10) gewichtet sind. Da die Mittenfrequenzen $f_q$ dieser Subträger gemäß der Gleichung (8) gewählt werden, sind die Subträger über die Zeitperiode $T_S$ orthogonal.

Ein Teilnehmer $k$, $k$=1...$K$, strahlt ein moduliertes Teilnehmersignal aus, das durch

$$\underline{d}^{(k)}(t) = \sum_{n=1}^{N} \underline{d}_n^{(k)} \cdot \underline{c}^{(k)}(t - [n-1]T_s;\underline{c}^{(k)}) \quad (13)$$

im äquivalenten Tiefpaßbereich gegeben ist. Die Erzeugung von $\underline{d}^{(k)}(t)$ wird durch lineare Modulation erreicht, vgl. Gleichung (13). Das modulierte Teilnehmersignal $\underline{d}^{(k)}(t)$ wird somit durch die Überlagerung verzögerter und gewichteter Impulsreplikas $\underline{c}^{(k)}(t;\underline{c}^{(k)})$ angegeben, die in Gleichung (13) vorgestellt wurden. Die Erzeugung des in Gleichung (13) dargestellten modulierten Teilnehmersignals $\underline{d}^{(k)}(t)$ ist identisch mit der Erzeugung von Teilnehmersignalen bei JD-CDMA (Joint-Detection-CDMA).

$K_a$ Replika des in der Gleichung (13) angegebenen modulierten Signals $\underline{d}^{(k)}(t)$ werden an den $K_a$ Empfangsantennen $E_1$. . $E_{K_a}$ der Basisstation BS empfangen. Jede dieser $K_a$ Replika ist durch die Funkkanäle mit den Impulsantworten $\underline{h}^{(k,ka)}(\tau,t)$, $k$ fest, $k_a$=1...$K_a$, nach Gleichung (6) beeinflußt worden. An jeder Empfangsantenne $E_{k_a}$ herrschen gleichzeitig $K$ empfangene Signale, die von den $K$ Teilhehmern herstammen. Diese $K$ empfangenen Signale überlagern sich linear und bilden eine Signalmischung. An einer anderen Empfangsantenne $E_{k'_a} \neq E_{k_a}$ unterscheiden sich die $K$ von den $K$ Teilnehmern stammenden, empfangenen Signale von denjenigen , die an der Empfangsantenne $E_{k_a}$ empfangen wurden. Somit können $K_a$ verschiedene Signalmischungen, die jeweils einer unterschiedlichen Empfangsantenne zugeordnet sind, von der Basisstation BS verarbeitet werden. Die geeignete Verarbeitung dieser $K_a$ verschiedenen Signalmischungen erleichtert eine Verbesserung der Ausführung gegenüber einer Ausführung in einem Empfänger mit einer einzigen Empfangsantenne. Diese Ausführungsverbesserung ist die Absenkung des Signal-Stör-Verhältnisses bei einer gegebenen Bitfehlerrate $P_b$. Durch Verarbeiten der $K_a$ Signalmischungen bestimmt der Empfänger der Basisstation BS die Schätzwerte

$$\underline{\hat{d}}^{(k)} = \left(\underline{\hat{d}}_1^{(k)}, \underline{\hat{d}}_2^{(k)} \ldots \underline{\hat{d}}_N^{(k)}\right)^T, \quad \underline{\hat{d}}_n^{(k)} \in \underline{V}, \quad \underline{V} \subset C, \quad k=1\ldots K, \quad n=1\ldots N,$$
$$K,N \in \mathbb{IN}. \quad (14)$$

der durch die Gleichung (7) definierten Datensymbolsequenzen $\underline{d}^{(k)}$.

Die weitere Erläuterung des Systemkonzepts nach der Erfindung erfolgt anhand einer Diskretzeit-Modelldarstellung.

Jede der an den $K_a$ Empfangsantennen $E_1...E_{K_a}$, herrschenden $K_a$ Signalmischungen muß bandbegrenzt werden, damit eine digitale Signalverarbeitung ermöglicht wird. Das Ausgangssignal des dieser Bandbegrenzung dienenden Filters wird mit einer Rate $Q/T_s$ abgetastet, die der Chiprate $1/T_C = Q/T_s$ bei JD-CDMA entspricht.

Die in der Gleichung (12) vorgestellte lineare MC-CDMA-Spreizmodulation wird durch mit einer Rate $1/T_c$ abgenommene Abtastwerte von $\underline{c}^{(k)}(t;\underline{c}^{(k)})$ gebildet. Die Abtastwerte $\underline{\zeta}_q^{(k)}$, $q$=1...$Q$, die durch diese Abtastungen erzeugt werden, bilden die $K$ Vektoren

$$\underline{\zeta}^{(k)} = \left(\underline{\zeta}_1^{(k)}, \underline{\zeta}_2^{(k)} \ldots \underline{\zeta}_Q^{(k)}\right)^T, \quad \underline{\zeta}_q^{(k)} \in \mathbb{C}, \quad k=1\ldots K, \quad q=1\ldots Q,$$
$$K, Q \in \mathbb{N}. \qquad (15)$$

Mit der Matrix

$$\underline{D} = (D_{\alpha,\beta}), \quad D_{\alpha,\beta} = \frac{1}{\sqrt{Q}} \exp\left\{j\frac{2\pi}{Q}(\alpha-1)(\beta-1)\right\}, \quad \alpha,\beta=1\ldots Q \qquad (16)$$

der inversen diskreten Fourier-Transformation (IDFT) ist die Beziehung zwischen $\underline{\zeta}^{(k)}$ nach Gleichung (15) und $\underline{c}^{(k)}$ nach Gleichung (10) gegeben durch

$$\underline{\zeta}^{(k)} = \underline{D}\,\underline{c}^{(k)}. \qquad (17)$$

Die Matrix (17) enthält die Q Spaltenvektoren

$$\underline{\delta}^{(q)} = (\underline{\delta}_1^{(q)}, \underline{\delta}_2^{(q)} \ldots \underline{\delta}_Q^{(q)})^T, \quad \underline{\delta}_\alpha^{(q)} = \frac{1}{\sqrt{Q}} \exp\left\{j\frac{2\pi}{Q}(\alpha-1)(q-1)\right\},$$
$$\alpha = 1\ldots Q. \qquad (18)$$

Somit ergibt sich:

$$\underline{D} = (\underline{\delta}^{(1)}, \underline{\delta}^{(2)}\ldots\underline{\delta}^{(Q)}). \qquad (19)$$

Aus den Funktionen (19) und (17) ergibt sich:

$$\underline{\zeta}^{(k)} = (c_1^{(k)}\delta^{(1)} + c_2^{(k)}\delta^{(2)} + \ldots + c_Q^{(k)}\delta^{(Q)}). \qquad (20)$$

In Anbetracht der Tatsache, daß jedes Chip $\underline{c}_q^{(k)}$ einem besonderen Subträger $q$ zugeordnet ist, ist die nun folgende Interpretation der Gleichung (17) einfach. Die Spalten $\underline{\delta}^{(q)}$, $q$=1...$Q$, der Matrix $\underline{D}$ stellen die $Q$ Subträger dar. Die Zeilen der Matrix $\underline{D}$ bilden die $Q$ Zeitpunkte innerhalb der Datensymbolperiode $T_S$, während welcher Abtastwerte abgenommen werden. Das Ergebnis der Gleichung (17) ist somit ein Vektor $\underline{\zeta}^{(k)}$ mit Elementen $\underline{\zeta}_q^{(k)}$, die sich aus einer linearen Kombination der Chips $\underline{c}_q^{(k)}$ ergeben. Die Vektoren $\underline{\zeta}^{(k)}$, $k$=1...$K$, lassen sich als teilnehmerspezifische Spreizsequenzen betrachten. Somit besteht der einzige Unterschied zwischen JD-CDMA und dem MC-CDMA-System nach der Erfindung in der Wahl der teilnehmerspezifischen Spreizsequenzen. Bei JD-CDMA werden die Codefolgen $\underline{c}^{(k)}$ als teilnehmerspezifische Spreizsequenzen benutzt und beim MC-CDMA nach der Erfindung werden die gemäß Gleichung (17) aus den Codefolgen $\underline{c}^{(k)}$ erhaltenen Vektoren $\underline{\zeta}^{(k)}$ eingesetzt. Somit stellt die Gleichung (17) die Verknüpfung zwischen JD-CDMA und dem gemäß der Erfindung ausgebildeten MC-CDMA-Systemkonzept dar.

Beim MC-CDMA-Systemkonzept nach der Erfindung ist die Zeitvariation eines Mobilfunkkanals innerhalb der Datensymboldauer $T_S$ vernachlässigbar. Deswegen wird zur Verständniserleichterung die Zeitabhängigkeit der Kanalimpulsantworten im folgenden nicht mehr explizit angegeben. Die $K \cdot K_a$ Mobilfunkkanäle haben die Kanalimpulsantworten

$$h^{(k,k_a)} = \left( h_1^{(k,k_a)}, h_2^{(k,k_a)} ... h_w^{(k,k_a)} \right)^T,$$
(21)

$h_w^{(k,k_a)} \in \mathbf{C}$, $k = 1...K$, $k_a = 1...K_a$, $w = 1...W$, $K$, $K_a$, $W \notin \mathbb{N}$

Jede Kanalimpulsantwort $\underline{h}^{(k,k_a)}$ der Gleichung (21) besteht aus $W$ komplexen Abtastwerten $h_w^{(k,k_a)}$. In der in Diskretzeit arbeitenden Aufwärtsstrecke werden bei MC-CDMA die in Gleichung (7) angegebenen Datensymbolsequenzen $\underline{d}^{(k)}$ über $K \cdot K_a$ Diskretzeit-Kanäle mit den kombinierten Kanalimpulsantworten

$$\underline{b}^{(k,k_a)} = \left( b_1^{(k,k_a)}, b_2^{(k,k_a)} ... b_{Q+W-1}^{(k,k_a)} \right)^T = \underline{h}^{(k,k_a)} * \underline{\zeta}^{(k)},$$
(22)

$h_w^{(k,k_a)} \in \mathbf{C}$, $k = 1...K$, $k_a = 1...K_a$, $l = 1...Q + W - 1$, $K$, $K_a$, $Q$, $W \notin \mathbb{N}$, übertragen, die aus der Diskretzeit-Faltung von der in Gleichung (21) dargestellten Kanalimpulsantwort $\underline{h}^{(k,k_a)}$ mit den in der Gleichung (16) definierten teilnehmerspezifischen Spreizsequenzen $\underline{\zeta}^{(k)}$ besteht. Intersymbolinterferenzen entstehen für $W>1$ und Vielfachzugriffsinterferenzen kommen für $W>1$ und/oder für nichtorthogonale Signatursequenzen $\underline{c}^{(k)}$ vor. Die Diskretzeit-Kanäle mit den kombinierten Kanalimpulsantworten $\underline{b}^{(k,k_a)}$, $k=1...K$, $k_a=1...K_a$, gemäß der Gleichung (22) werden als $(Q+W-1)$-Pfad-Kanäle bezeichnet. Im folgenden wird vorausgesetzt, daß die in der Gleichung (22) dargestellten kombinierten Kanalimpulsantworten $\underline{b}^{(k,k_a)}$ beim Empfänger bekannt sind, was bei Benutzung einer vollkommenen Kanalschätzung sichergestellt werden kann. Die Kanalschätzung soll im folgenden nicht betrachtet werden, weil die Auswirkung von Kanalschätzfehlern auf die Datendetektion bei einer Untersuchung der Fähigkeiten verschiedener Datendetektoren nicht von Interesse ist.

Die an einer Empfangsantenne $E_{k_a}$ jeweils herrschende Signalmischung wird durch die empfangene Sequenz $\underline{e}^{(k_a)}$ der Länge $(N \cdot Q+W\text{-}1)$ dargestellt. Diese Sequenz $\underline{e}^{(k_a)}$ enthält die in der Gleichung (7) dargestellten Datensymbolsequenzen $\underline{d}^{(k)}$, die durch die vorher bereits erwähnte additive stationäre Störsequenz

$$\underline{n}^{(k_a)} = \left( n_1^{(k_a)}, n_2^{(k_a)} ... n_{N \cdot Q+W-1}^{(k_a)} \right)^T,$$
(23)

$n_n^{(k_a)} \in \mathbf{C}$, $k_a = 1...K_a$, $n = 1...N \cdot Q + W - 1$, $K_a$, $N$, $Q$, $W \notin \mathbb{N}$ mit der Kovarianzmatrix

$$\underline{R}_n^{(k_a)} = \mathrm{E}\left\{ \underline{n}^{(k_a)} \underline{n}^{(k_a)*T} \right\}, \quad k_a = 1...K_a, \quad K_a \in \mathbb{N}$$
(24)

gestört sind.

Nach Einführung des Datenvektors

$$\underline{d} = (\underline{d}^{(1)T}, \underline{d}^{(2)T} ... \underline{d}^{(K)T})^T = (\underline{d}_1, \underline{d}_2 ... \underline{d}_{K \cdot N})^T, \quad K, N \in \mathbb{N},$$
(25)

mit

$$\underline{d}_{N \cdot (k-1)+n} \stackrel{def}{=} \underline{d}_n^{(k)}, \quad k = 1...K, \quad n = 1...N, \quad K, N \in \mathbb{N},$$
(26)

und Definition der $(N \cdot Q+W\text{-}1)$ x $K \cdot N$-Matrix

$$\underline{A}^{(k_a)} = (\underline{A}_{ij}^{(k_a)}), \quad \begin{array}{l} i = 1 \ldots N \cdot Q + W - 1 \\ j = 1 \ldots K \cdot N \end{array} \qquad (27a)$$

$$\underline{A}_{Q \cdot (n-1)+l, N \cdot (k-1)+n}^{(k_a)} = \begin{cases} \underline{b}_l^{(k,k_a)} & \text{für} \quad \begin{array}{l} k = 1, \\ k_a = 1 \ldots K_a, \\ l = 1 \ldots Q + W - 1 \\ n = 1 \ldots N, \end{array} \\ 0 & \text{sonst.,} \end{cases} \qquad (27b)$$

läßt sich die empfangene Sequenz durch

$$\underline{e}^{(k_a)} = \left( \underline{e}_1^{(k_a)}, \underline{e}_2^{(k_a)} \ldots \underline{e}_{N \cdot Q+W-1}^{(k_a)} \right)^T = \underline{A}^{(k_a)} \underline{d} + \underline{n}^{(k_a)} \qquad (28)$$

darstellen. Zum leichteren Verständnis der Gleichung (28) soll die Matrix $\underline{A}$ weiter erläutert werden. Gemäß der Gleichung (27a) hat die Matrix $\underline{A}$ folgende Form:

$$\underline{A}^{(k_a)} = \begin{pmatrix} \underline{b}_1^{(1,k_a)} & 0 & \cdots & 0 & \underline{b}_1^{(2,k_a)} & 0 & \cdots & 0 \\ \underline{b}_2^{(1,k_a)} & 0 & \cdots & 0 & \underline{b}_2^{(2,k_a)} & 0 & \cdots & 0 \\ \vdots & \vdots & \vdots & \vdots & \vdots & \vdots & \vdots & \vdots \\ \underline{b}_Q^{(1,k_a)} & 0 & \cdots & 0 & \underline{b}_Q^{(2,k_a)} & 0 & \cdots & 0 \\ \underline{b}_{Q+1}^{(1,k_a)} & \underline{b}_1^{(1,k_a)} & \cdots & 0 & \underline{b}_{Q+1}^{(2,k_a)} & \underline{b}_1^{(2,k_a)} & \cdots & 0 \\ \vdots & \vdots & \vdots & \vdots & \vdots & \vdots & \vdots & \vdots \\ \underline{b}_{W+Q-1}^{(1,k_a)} & \underline{b}_{W-1}^{(1,k_a)} & \cdots & 0 & \underline{b}_{W+Q-1}^{(2,k_a)} & \underline{b}_{W-1}^{(2,k_a)} & \cdots & 0 \\ \vdots & \vdots & \vdots & 0 & \vdots & \vdots & \vdots & \vdots \\ 0 & \underline{b}_{W+Q-1}^{(1,k_a)} & \cdots & 0 & 0 & \underline{b}_{W+Q-1}^{(2,k_a)} & \cdots & 0 \\ & 0 & 0 & \cdots & 0 & 0 & 0 & \cdots \\ \vdots & \vdots & \vdots & \vdots & \vdots & \vdots & \vdots & \vdots \\ 0 & 0 & \cdots & \underline{b}_{W+Q-1}^{(1,k_a)} & 0 & 0 & \cdots & \underline{b}_{W+Q-1}^{(K,k_a)} \end{pmatrix} \qquad (29a)$$

$$\underline{A}^{(k_a)} = \left( \underline{A}^{(1,k_a)}, \underline{A}^{(2,k_a)} \ldots \underline{A}^{(K,k_a)} \right). \qquad (29b)$$

Die Matrix $\underline{A}^{(k_a)}$ besteht aus $K$ Sätzen, die $N$ Spalten umfassen. Jeder Satz läßt sich als eine $(N \cdot Q+W-1)$ x $N$-Untermatrix $\underline{A}^{(k,k_a)}$ betrachten. Die erste Untermatrix $\underline{A}^{(1,k_a)}$ ist dem Teilnehmer 1 zugeordnet, die folgende Untermatrix $\underline{A}^{(2,k_a)}$ gehört zur Übertragung des Teilnehmers 2, und so fort. Innerhalb jeder Untermatrix $\underline{A}^{(k,k_a)}$ wird die aufeinanderfolgende Übertragung der $N$ Datensymbole $\underline{d}_n^{(k)}$ berücksichtigt. Die erste Spalte der Untermatrix $\underline{A}^{(k,k_a)}$ bildet immer die Übertragung von $\underline{d}_1^{(k)}$ nach, die zweite Spalte bezieht sich auf die Übertragung von $\underline{d}_2^{(k)}$, und so fort. Die Anzahl der nichtnegativen Elemente pro Spalte ist durch die Länge $W$ der kombinierten Kanalimpulsantworten $\underline{b}^{(k,k_a)}$ der Gleichung (22) gegeben. Da ein neues Datensymbol $\underline{d}_n^{(k)}$ alle $Q$ Chips übertragen wird, beträgt der Versatz von $\underline{b}_w^{(k,k_a)}$ zwischen benachbarten Spalten der Untermatrix $\underline{A}^{(k,k_a)}$ immer $Q$ Zeilen für ein gegebenes $w$. Die Wirkung der Intersymbolinterferenzen wird durch Nichtnull-Elemente in benachbarten Spalten, aber in identischen Zeilen der Untermatrix $\underline{A}^{(k,k_a)}$ nachgebildet. Die Anordnung der Untermatrizen $\underline{A}^{(k,k_a)}$ innerhalb der Matrix $\underline{A}^{(k_a)}$ berücksichtigt den gleichzeitigen Empfang von $K$ Teilnehmersignalen und deswegen das Vorliegen von Vielfachzugriffsinterferenzen.

Ausgehend von der vorstehenden Diskussion, wird nun eine vereinheitlichte mathematische Darstellung für den Fall von $K_a$ Empfangsantennen $E_1 \ldots E_{k_a}$ vorgenommen. Zuerst wird die kombinierte $K_a \cdot (N \cdot Q+W-1)$x$K \cdot N$-Kanalma-

trix $\underline{A}$ wie folgt definiert:

$$\underline{A} = (A_{i,j}) = (\underline{A}^{(1)T}, \underline{A}^{(2)T}...\underline{A}^{(K_a)T})^T, \; K_a \in \text{N}. \tag{30}$$

Die Matrix $\underline{A}$ enthält alle $K \cdot K_a$ kombinierten Kanalimpulsantworten $\underline{b}^{(k,k_a)}$ der Gleichung (22). Wie bereits vorher erwähnt wurde, herrscht die in der Gleichung (23) definierte Störsequenz $\underline{n}^{(k_a)}$, $k_a = 1...K_a$ an jeder der $K_a$ Empfangsantennen $E_1...E_{K_a}$. Die $K_a$ verschiedenen Störsequenzen werden durch den kombinierten Störvektor

$$\underline{n} = (\underline{n}^{(1)T}, \underline{n}^{(2)T}...\underline{n}^{(K_a)T})^T = (\underline{n}_1, \underline{n}_2...\underline{n}_{K_a \cdot (N \cdot Q + W - 1)})^T, \; K_a, N, Q, W \in \text{IN}, \tag{31}$$

dargestellt, worin

$$\underline{n}_{(N \cdot Q + W - 1) \cdot (k_a - 1) + n} \stackrel{def}{=} \underline{n}_n^{(k_a)}, \; k_a = 1...K_a, \; n = 1...N \cdot Q + W - 1 \\ K_a, N, Q, W \in \text{IN} \tag{32}$$

gilt. Die in der Gleichung (31) definierten statistischen Eigenschaften von $\underline{n}$ werden durch die folgende Kovarianzmatrix angegeben:

$$\underline{R}_n = \text{E}\left\{\underline{n}\,\underline{n}^{*T}\right\} = \begin{pmatrix} \underline{R}_n^{(1)(1)} & \underline{R}_n^{(1)(2)} & \cdots & \underline{R}_n^{(1)(K_a)} \\ \underline{R}_n^{(2)(1)} & \underline{R}_n^{(2)(2)} & \cdots & \underline{R}_n^{(2)(K_a)} \\ \vdots & \vdots & \cdots & \vdots \\ \underline{R}_n^{(K_a)(1)} & \underline{R}_n^{(K_a)(2)} & \cdots & \underline{R}_n^{(K_a)(K_a)} \end{pmatrix}, \tag{33a}$$

$$\underline{R}_n^{(i)(j)} = \text{E}\left\{\underline{n}^{(i)}\underline{n}^{(j)*T}\right\}, \; i, j = 1...K_a, \; K_a \in \text{IN}. \tag{33b}$$

Mit der in der Gleichung (25) eingeführten kombinierten Datensequenz $\underline{d}$, mit der kombinierten Kanalmatrix $\underline{A}$ nach Gleichung (30) und mit der in der Gleichung (31) angeführten kombinierten Störsequenz $\underline{n}$ ergibt sich der kombinierte Empfangssignalvektor

$$\underline{e} = (\underline{e}^{(1)T}, \underline{e}^{(2)T}...\underline{e}^{(K_a)T})^T = (\underline{e}_1, \underline{e}_2...\underline{e}_{K_a \cdot (N \cdot Q + W - 1)})^T = \underline{A}\,\underline{d} + \underline{n}, \tag{34} \\ K_a, N, Q, W \in \text{IN},$$

mit

$$\underline{e}_{(N \cdot Q + W - 1) \cdot (k_a - 1) + n} \stackrel{def}{=} \underline{e}_n^{(k_a)}, \; k_a = 1...K_a, \; n = 1...N \cdot Q + W - 1 \\ K_a, N, Q, W \in \text{IN}. \tag{35}$$

Der Empfangssignalvektor $\underline{e}$ nach Gleichung (34) wird dann in einem Datendetektor verarbeitet, um die durch die Gleichung (14) definierten Schätzwerte $\underline{\hat{d}}^{(k)}$ zu bestimmen.

Eine Mehrteilnehmerdetektion (JD = Joint Detection), insbesondere in Verbindung mit kohärenter Empfangsantennen-Diversität, für den Fall der Aufwärtsstrecke von MC-CDMA-Funksystemen ist bisher weder realisiert noch untersucht worden. Im folgenden werden geeignete Techniken zur Mehrteilnehmerdetektion, auch zur Anwendung in Verbindung mit Empfangsantennen-Diversität, vorgeschlagen. Da optimale JD-Techniken sehr aufwendig und teuer sind, werden lediglich suboptimale Verfahren behandelt. Es werden vier suboptimale, auf einer linearen Entzerrung bzw. auf einer Entscheidungsrückkopplungsentzerrung basierende JD-Techniken, die sich auch zusammen mit kohärenter Empfangsantennen-Diversität einsetzen lassen, vorgeschlagen, nämlich

- der sogenannte lineare Zero-Forcing-Blockentzerrer (ZF-BLE = Zero Forcing Block Linear Equalizer), auch geeignet für kohärente Empfangsantennen-Diversität,
- der sogenannte Minimum-Mean-Square-Error-Blockentzerrer (MMSE-BLE = Minimum Mean Square Error Block Linear Equalizer), auch geeignet für kohärente Empfangsantennen-Diversität,
- der sogenannte Zero-Forcing-Blockentzerrer mit quantisierter Rückkopplung (ZF-BDFE = Zero Forcing Block Decision Feedback Equalizer), auch geeignet für kohärente Empfangsantennen-Diversität, und
- der sogenannte Minimum-Mean-Square-Error-Blockentzerrer mit quantisierter Rückkopplung (MMSE-BDFE = Minimum Mean Square Error Block Decision Feedback Equalizer), ebenfalls geeignet für kohärente Empfangsantennen-Diversität.

Alle vier vorgeschlagenen JD-Techniken enthalten ein dekorrelierendes signalangepaßtes Filter.

Im folgenden wird vorausgesetzt, daß der durch die Gleichung (34) definierte Empfangssignalvektor $\underline{e}$ beim Empfänger bekannt ist, bevor die Datendetektion ausgeführt wird. Das grundsätzliche Konzept der in einem MC-CDMA-System nach der Erfindung angewandten JD-Techniken wird durch einen Satz von Gleichungen

$$\underline{S}\,\underline{\hat{d}} = \underline{M}\,\underline{e} \tag{36}$$

angegeben, worin

$$\underline{S} = (\underline{S}_{i,j}),\ i,j = 1...K{\cdot}N, \tag{37}$$

eine quadratische Matrix mit $K{\cdot}N$ Zeilen und $K{\cdot}N$ Spalten,

$$\underline{M} = (\underline{M}_{i,j}),\ i = 1...\ K{\cdot}N,\ j = 1...N{\cdot}Q+W\text{-}1, \tag{38}$$

eine $K{\cdot}N$ x $K_a{\cdot}(N{\cdot}Q+W\text{-}1)$-Schätzmatrix und

$$\underline{\hat{d}} = (\ \underline{\hat{d}}_1,\ \underline{\hat{d}}_2...\underline{\hat{d}}_{K{\cdot}N})^{\mathsf{T}} \tag{39}$$

der Schätzwert des in der Gleichung (25) definierten Datenvektors $\underline{d}$ ist. Die Wahl der Matrizen $\underline{M}$ und $\underline{S}$ bestimmt die jeweilige Technik der Mehrteilnehmerdetektion (JD). Im folgenden werden die Darstellungen der Matrizen $\underline{M}$ und $\underline{S}$ im Falle von ZF-BLE, ZF-BDFE, MMSE-BLE und von MMSE-BDFE, jeweils für kohärente Empfangsantennen-Diversität, abgeleitet. Die im Schätzwert $\underline{\hat{d}}$ nach der Gleichung (39) geschätzten Datensymbole $\underline{\hat{d}}_n$ sind entweder wertekontinuierlich (bezeichnet mit $\underline{\hat{d}}_{c,n}$ und enthalten in $\underline{\hat{d}}_c$) oder wertediskret (bezeichnet mit $\underline{\hat{d}}_{q,n}$ und enthalten in $\underline{\hat{d}}_q$). Die wertekontinuierlichen Schätzwerte $\underline{\hat{d}}_{c,n}$ müssen quantisiert werden, damit sich die gewünschten wertediskreten Schätzwerte $\underline{\hat{d}}_n^{(k)}$ ergeben. Darüber hinaus wird vorausgesetzt, daß $\left(\ \underline{\hat{d}}^{(1)\mathsf{T}},\ \underline{\hat{d}}^{(2)\mathsf{T}}...\underline{\hat{d}}^{(k)\mathsf{T}}\ \right)^{\mathsf{T}}$ immer identisch mit dem wertediskreten Schätzwert $\underline{\hat{d}}_q$ ist.

Die Übertragung von Datensymbolen $\underline{d}_n^{(k)}$ mit $E\{\underline{d}_n^{(k)}\}$ gleich Null wird im folgenden vorausgesetzt. Die Ausführung, die durch Anwendung einer besonderen JD-Technik für kohärente Empfangsantennen-Diversität erreicht werden kann, ist vom Signal-Stör-Verhältnis $\gamma(k,n)$ am Ausgang der JD-Einrichtung für kohärente Empfangsantennen-Diversität abhängig. Dieses Signal-Stör-Verhältnis $\gamma(k,n)$ wird für jedes von einem Teilnehmer $k$ übertragene Datensymbol $\underline{d}_n^{(k)}$ bestimmt. Es gilt:

$$\gamma(k,n) = \frac{\text{Varianz der Signalkomponente}}{\text{Varianz der Stör - und Interferenzkomponenten}} \qquad (40)$$

$$\gamma(k,n) = \frac{E\left\{\left|\hat{\underline{d}}_{N\cdot(k-1)+n}\right|^2\right\}_{\text{störfrei, }\underline{d}_n^{(k)}\text{ isoliert}}}{E\left\{\left|\hat{\underline{d}}_{N\cdot(k-1)+n}\right|^2\right\}\Big|_{\underline{d}_n^{(k)}=0}}, \qquad k = 1\ldots K, \quad n = 1\ldots N.$$

Im folgenden wird ein dekorrelierendes signalangepaßtes Filter (dekorrelierendes Matched Filter), das zur Anwendung für kohärente Empfangsantennen-Diversität geeignet ist, vorgestellt. Seine Betriebsweise erfordert, daß $\underline{A}$ nach Gleichung (30), $\underline{R}_n$ nach Gleichung (33a) und $\underline{e}$ nach Gleichung (34) am Empfänger bekannt sind. Mit der Matrix $\boldsymbol{D}\text{iag}\langle\underline{X}_{i,j}\rangle$, die eine nur aus Diagonalelementen der Matrix $\underline{X}$ bestehende Diagonalmatrix bezeichnet, und mit der sogenannten Cholesky-Zerlegung

$$\underline{R}_n^{-1} = \underline{L}^{*\mathrm{T}}\underline{L}, \qquad (41)$$

worin $\underline{L}$ eine obere Dreiecksmatrix

$$\underline{L} = (\underline{L}_{i,j}),\ \underline{L}_{i,j} = 0 \,\forall\, i>j,\ i,j=1\ldots K_a\cdot(N\cdot Q+W\text{-}1) \qquad (42)$$

ist, ist das wertekontinuierliche Ausgangssignal des dekorrelierenden signalangepaßten Filters für kohärente Empfangsantennen-Diversität gegeben durch:

$$\hat{\underline{d}}_c = \underline{A}^{*\mathrm{T}}\underline{R}_n^{-1}\underline{e} \qquad (43a)$$

$$= (\underline{L}\ \underline{A})^{*\mathrm{T}}\underline{L}\ \underline{e} \qquad (43b)$$

$$= \underbrace{\boldsymbol{D}\text{iag}\left\langle\left[(\underline{L}\underline{A})^{*\mathrm{T}}\underline{L}\underline{A}\right]_{i,j}\right\rangle\underline{d}}_{\text{Nutzanteil}} +$$

$$\underbrace{\left[(\underline{L}\underline{A})^{*\mathrm{T}}\underline{L}\underline{A} - \boldsymbol{D}\text{iag}\left\langle\left[(\underline{L}\underline{A})^{*\mathrm{T}}\underline{L}\underline{A}\right]_{i,j}\right\rangle\right]\underline{d}}_{\text{Intersymbol- und Vielfachzugriffinterferenz}} + \qquad (43c)$$

$$\underbrace{(\underline{L}\ \underline{A})^{*\mathrm{T}}\underline{L}\ \underline{n}}_{\text{Störung}}.$$

Im Gleichungssatz (43a) bis (43c) bedeutet $[\underline{X}]_{i,j}$ das Element in der $i$-ten Zeile und der $j$-ten Spalte der Matrix $\underline{X}$. Gemäß dem Gleichungssatz (43a) bis (43c) enthält der Schätzwert $\underline{d}_c$ sowohl Intersymbol- und Vielfachzugriffinterferenzen als auch einen gefiltertem Rauschen zugeordneten Störungsterm. Aus der Gleichung (43b) folgt, daß $\boldsymbol{S}$ die $K\cdot N \times K\cdot N$-Einheitsmatrix $\boldsymbol{I}$ ist und die Schätzmatrix $\underline{M}$ durch

$$\underline{M} = \underbrace{(\underline{L}\ \underline{A})^{*T}}_{\text{angepaßtes Filter}} \quad \underbrace{(\underline{L})}_{\text{dekorrelierendes Filter}} \qquad (44)$$

dargestellt wird. Die Operation $\underline{L}\ \underline{e}$ dekorreliert, d.h. macht die Störung vorher weiß. Somit ist $\underline{L}$ ein Weißmach-Vorfilter oder Dekorrelationsfilter. Das Signal $\underline{L}\ \underline{e}$ wird dem Filter $(\underline{L}\ \underline{A})^{*T}$ eingespeist, das an die Verkettung der $K \cdot K_a$ Diskretzeit-Kanäle mit den kombinierten Kanalimpulsantworten $\underline{b}^{(k,k_a)}$ der Gleichung (22) und dem Dekorrelationsfilter $\underline{L}$ angepaßt ist. Die Verkettung von $\underline{L}$ mit $(\underline{L}\ \underline{A})^{*T}$ ist ein dekorrelierendes signalangepaßtes Filter.

Der Einfachheit halber wird die hermitesche Matrix

$$\underline{E} = \underline{A}^{*T}\ \underline{R}_n^{-1}\ \underline{A} = (\underline{L}\ \underline{A})^{*T}\ \underline{L}\ \underline{A} \qquad (45)$$

angegeben. Unter der Voraussetzung, daß die Datensymbole $\underline{d}_n^{(k)}$ Abtastwerte eines stationären Prozesses mit der Kovarianzmatrix

$$\underline{R}_d = E\{\underline{d}\ \underline{d}^{*T}\} \qquad (46)$$

sind, ist das Signal-Stör-Verhältnis $\gamma(k,n)$ am Ausgang des in der Gleichung (40) formulierten dekorrelierenden ange-paßten Filters durch

$$\gamma(k,n) = \frac{E\left\{\left|\underline{d}_n^{(k)}\right|^2\right\} \cdot \left([\underline{E}]_{\nu,\nu}\right)^2}{[\underline{E}\ \underline{R}_d\ \underline{E}]_{\nu,\nu} + \left(1 - 2\mathrm{Re}\left\{[\underline{E}\ \underline{R}_d]_{\nu,\nu}\right\}\right) \cdot [\underline{E}]_{\nu,\nu} + E\left\{\left|\underline{d}_n^{(k)}\right|^2\right\} \cdot \left([\underline{E}]_{\nu,\nu}\right)^2}$$
$$\nu = N \cdot (k-1) + n,\quad k = 1 \ldots K,\quad n = 1 \ldots N. \qquad (47)$$

gegeben.

Ein wichtiger Spezialfall wird durch additives weißes Gauß'sches Rauschen der Varianz $\sigma^2$ und durch unkor-relierte Datensymbole gebildet, d.h. die Kovarianzmatrix $\underline{R}_d$ ist gleich der $K \cdot N \times K \cdot N$-Einheitsmatrix $\underline{I}$. In diesem Spezi-alfall ergibt sich die Schätzmatrix $\underline{M}$ zu

$$\underline{M} = \frac{1}{\sigma^2}\ \underline{A}^{*T}. \qquad (48)$$

Entsprechend der Gleichung (48) besteht das dekorrelierende angepaßte Filter für kohärente Empfangsan-tennen-Diversität aus $K_a$ den $K_a$ Empfangsantennen $E_1 \ldots E_{K_a}$ zugeordneten signalangepaßten Filtern. Die Gleichung (47) reduziert sich überdies zu

$$\gamma(k,n) = \frac{\left([\underline{A}^{*T}]_{\nu,\nu}\right)^2}{[\underline{A}^{*T}\ \underline{A}\ \underline{A}^{*T}\ \underline{A}]_{\nu,\nu} + \sigma^2 \cdot [\underline{A}^{*T}\ \underline{A}]_{\nu,\nu} - \left([\underline{A}^{*T}\ \underline{A}]_{\nu,\nu}\right)^2},$$
$$\nu = N \cdot (k-1) + n,\quad k = 1 \ldots K,\quad n = 1 \ldots N. \qquad (49)$$

Das in der Gleichung (47) angegebene Signal-Stör-Verhältnis $\gamma(k,n)$ ist maximal, wenn weder Intersymbol-noch Vielfachzugriffinterferenzen vorhanden sind. In diesem Fall reduziert sich die Gleichung (47) auf

$$\gamma(k,n) \;=\; \mathrm{E}\left\{\left|\underline{d}_n^{(k)}\right|^2\right\} \cdot \left[\underline{\underline{E}}\right]_{N\cdot(k-1)+n,\,N\cdot(k-1)+n},\quad k=1\ldots K,\; n=1\ldots N. \qquad (50)$$

Im vorher erwähnten besonderen Fall des additiven weißen Gauß'schen Rauschens und unkorrelierter Datensymbole wird die Gleichung (50) zu

$$\gamma(k,n) \;=\; \frac{1}{\sigma^2}\left[\underline{\underline{A}}^{*T}\underline{\underline{A}}\right]_{N\cdot(k-1)+n,\,N\cdot(k-1)+n} \;=\; \sum_{k_a=1}^{K_a}\frac{\left\|\underline{b}^{(k,k_a)}\right\|^2}{\sigma^2}. \qquad (51)$$

Gemäß der Gleichung (51) ist das Signal-Stör-Verhältnis am Ausgang des dekorrelierenden signalangepaßten Filters für kohärente Empfangsantennen-Diversität die Summe der Signal-Stör-Verhältnisse an den Ausgängen der $K_a$ den $K_a$ Empfangsantennen $E_1\ldots E_{K_a}$ zugeordneten signalangepaßten Filter.
Der sogenannte lineare Zero-Forcing-Blockentzerrer (ZF-BLE), geeignet auch für kohärente Empfangsantennen-Diversität, beruht auf der Gauß-Markov Schätzung. Die ZF-BLE-Entzerrung minimiert die quadratische Form

$$Q(\underline{d}_c) = (\underline{e} - \underline{A}\,\underline{d}_c)^{*T}\underline{R}_n^{-1}(\underline{e} - \underline{A}\,\underline{d}_c), \qquad (52)$$

worin $\underline{d}_c$ ein Datenvektor mit wertekontinuierlichen Elementen $d_{c,n}$, $n=1\ldots K\cdot N$ ist. Das Minimum von $Q(\underline{d}_c)$ ist dem wertekontinuierlichen und erwartungstreuen Schätzwert

$$\hat{\underline{d}}_c \;=\; \left(\underline{A}^{*T}\underline{R}_n^{-1}\underline{A}\right)^{-1}\underline{A}^{*T}\underline{R}_n^{-1}\underline{e} \;=\; \underline{d} + \underbrace{\left(\underline{A}^{*T}\underline{R}_n^{-1}\underline{A}\right)^{-1}\underline{A}^{*T}\underline{R}_n^{-1}\underline{n}}_{\text{Störung}} \qquad (53)$$

des Datenvektors $\underline{d}$ zugeordnet, der in Gleichung (25) angegeben ist. Entsprechend Gleichung (53) ist der Schätzwert $\underline{d}_c$ von Intersymbol- und Vielfachzugriffinterferenzen frei, enthält aber noch einen das gefilterte Rauschen darstellenden Störungsterm.
Aus der Gleichung (53) folgt, daß $\underline{S}$ die $K\cdot N$x$K\cdot N$-Einheitsmatrix $I$ ist, und die Schätzmatrix $\underline{M}$ läßt sich darstellen als

$$\underline{M} = \left(\underline{A}^{*T}\underline{R}_n^{-1}\underline{A}\right)^{-1}\underline{A}^{*T}\underline{R}_n^{-1}. \qquad (54)$$

Die Schätzmatrix $\underline{M}$ läßt sich noch weiterentwickeln. Mit der Cholesky-Zerlegung

$$\underline{A}^{*T}\underline{R}_n^{-1}\underline{A} = \underline{H}^{*T}\,\Sigma^2\,\underline{H}, \qquad (55)$$

worin $\underline{H}$ eine obere Dreiecksmatrix und $\Sigma$ eine Diagonalmatrix ist,

$$\underline{H} = (\underline{H}_{i,j}),\; \underline{H}_{i,j} = 0\,\forall i>j,\; \underline{H}_{i,i} = 1\,\forall i,\; i,j = 1\ldots K\cdot N, \qquad (56a)$$

$$\Sigma = \mathrm{Diag}\langle\sigma_{i,j}\rangle,\quad \sigma_{i,j}\in\mathbb{R},\; i=1\ldots K\cdot N, \qquad (56b)$$

läßt sich die Gleichung (54) darstellen als:

$$\underline{M} = \underbrace{(\varSigma \underline{H})^{-1}}_{\substack{\text{Intersymbol- und} \\ \text{Vielfachzugriff-Canceller}}} \quad \underbrace{(\underline{H}^{*T}\varSigma)^{-1}}_{\text{Weißmacherfilter}} \quad \underbrace{(\underline{L}\ \underline{A})^{*T}}_{\substack{\text{Signalangepaßtes} \\ \text{Filter}}} \quad \underbrace{(\underline{L})}_{\substack{\text{Dekorrelations-} \\ \text{Filter}}} . \tag{57}$$

Wie vorher bereits erwähnt worden ist, enthält der lineare Zero-Forcing-Blockentzerrer (ZF-BLE) ein dekorrelierendes signalangepaßtes Filter, welches für den Empfangssignalvektor $\underline{e}$ nach Gleichung (34) eingesetzt wird. Das Ausgangssignal des dekorrelierenden signalangepaßten Filters wird in das Weißmacherfilter $(\underline{H}^{*T}\Sigma)^{-1}$ eingespeist. Die Kombination der Filter $\underline{L}$, $(\underline{L}\ \underline{A})^{*T}$ und $(\underline{H}^{*T}\Sigma)^{-1}$ soll als dekorrelierendes, weißmachendes signalangepaßtes Filter bezeichnet werden. Am Ausgang dieses kombinierten Filters läßt sich ein Maximum-Likelihood-Sequenz-Schätzer (MLSE) einsetzen. Der Aufwand für einen solchen Maximum-Likelihood-Sequenz-Schätzer (MLSE) ist jedoch ziemlich hoch. Deswegen ist die Verwendung eines linearen Intersymbol- und Vielfachzugriffinterferenz-Löschers (Canceller), so wie durch den Ausdruck $(\Sigma\underline{H})^{-1}$ angegeben, günstiger.

Mit der durch die Gleichung (45) definierten Matrix $\underline{E}$ läßt sich das Signal-Stör-Verhältnis $\gamma(k,n)$ am Ausgang des linearen Zero-Forcing-Blockentzerrers (ZF-BLE) durch den Ausdruck

$$\gamma(k,n) = \frac{E\left\{\left|\underline{d}_n^{(k)}\right|^2\right\}^2}{\left[\underline{E}^{-1}\right]_{N\cdot(k-1)+n,\ N\cdot(k-1)+n}}, \quad k=1\ldots K,\ n=1\ldots N,\ K,N \in \mathbb{N}, \tag{58}$$

darstellen, der im allgemeinen kleiner als $\gamma(k,n)$ nach Gleichung (50) am Ausgang des dekorrelierenden signalangepaßten Filters ist. Der lineare Zero-Porcing-Blockentzerrer (ZF-BLE) arbeitet jedoch besser als das dekorrelierende signalangepaßte Filter, wenn die Intersymbol- und Vielfachzugriffinterferenzen beträchtlich sind.

Im vorher erwähnten besonderen Fall des additiven weißen Gauß'schen Rauschens und unkorrelierter Datensymbole ist die Schätzmatrix $\underline{M}$ nach Gleichung (54) gegeben durch

$$\underline{M} = (\underline{A}^{*T}\underline{A})^{-1}\ \underline{A}^{*T}, \tag{59}$$

und die Gleichung (58) reduziert sich auf

$$\gamma(k,n) = \frac{1}{\sigma^2 \cdot \left[\left(\underline{A}^{*T}\underline{A}\right)^{-1}\right]_{N\cdot(k-1)+n,\ N\cdot(k-1)+n}}, \quad k=1\ldots K,\ n=1\ldots N,\ K,N \in \mathbb{N}. \tag{60}$$

Der sogenannte Zero-Forcing-Blockentzerrer mit quantisierter Rückkopplung (ZF-BDFE), geeignet auch für kohärente Empfangsantennen-Diversität, soll im folgenden ausgehend vom gerade beschriebenen linearen Zero-Forcing-Blockentzerrer (ZF-BLE), der für kohärente Empfangsantennen-Diversität geeignet ist, abgeleitet werden. Die Ableitung des ZF-BDFE-Entzerrers nützt die Struktur der oberen Dreiecksmatrix $\underline{H}$ aus. Mit den Gleichungen (53) und (57) gilt

$$\underline{H}\hat{\underline{d}}_c = \hat{\underline{d}}_c + (\underline{H} - \underline{I})\hat{\underline{d}}_c = \varSigma^{-1}\left(\underline{H}^{*T}\varSigma\right)^{-1}(\underline{L}\underline{A})^{*T}\underline{L}\underline{e} \tag{61a}$$

$$= \underline{M}\ \underline{e}, \tag{61b}$$

worin die Schätzmatrix

$$\underline{M} = \Sigma^{-1}(\underline{H}^{*T}\Sigma)^{-1}(\underline{L}\underline{A})^{*T}\underline{L} \qquad (62)$$

benutzt wird und **I** die $K \cdot N \times K \cdot N$-Einheitsmatrix bezeichnet. Gemäß Gleichung (62) enthält der sogenannte Zero-Forcing-Blockentzerrer mit quantisierter Rückkopplung (ZF-BDFE), der auch für kohärente Empfangsantennen-Diversität geeignet sein soll, ein dekorrelierendes, weißmachendes signalangepaßtes Filter. Die Gleichheiten

$$\hat{\underline{d}}_{c,K \cdot N} = \sum_{j=1}^{K_a \cdot (N \cdot Q + W - 1)} \underline{M}_{K \cdot N, j}\,\underline{e}_j, \qquad (63a)$$

$$\hat{\underline{d}}_{c,n} + \sum_{j=n+1}^{K \cdot N} \underline{H}_{n,j}\,\hat{\underline{d}}_{c,j} = \sum_{j=1}^{K_a \cdot (N \cdot Q + W - 1)} \underline{M}_{n,j}\,\underline{e}_j, \quad n=1 \ldots K \cdot N - 1, \qquad (63b)$$

folgen aus der Gleichung (61b). Gemäß der Gleichung (63a) wird der Schätzwert $\hat{\underline{d}}_{c,K \cdot N}$ durch die lineare Überlagerung der $K_a \cdot (N \cdot Q + W - 1)$ gewichteten Elemente $\underline{M}_{K \cdot N, j}\,\underline{e}_j$ bestimmt. Alle anderen Schätzwerte $\hat{\underline{d}}_{c,n}$ sind überdies durch die gewichteten Schätzwerte $\underline{H}_{n,n+1}\,\underline{d}_{c,n+1}$, $\underline{H}_{n,n+2}\,\underline{d}_{c,n+2}\cdots \underline{H}_{n,K \cdot N}\,\underline{d}_{c,K \cdot N}$ beeinflußt, vgl. Gleichung (63b). Unter der Voraussetzung, daß der in (63a) und (63b) angegebene Gleichungssatz rekursiv mit von $K \cdot N$ bis zu Eins herabsteigenden n gelöst wird, läßt sich eine sogenannte Zero-Forcing-Blockentzerrung mit quantisierter Rückkopplung (ZF-BDFE), die auch für kohärente Empfangsantennen-Diversität geeignet ist, realisieren. Ersetzt man $\underline{d}_{c,j}$, $j=(n+1)\ldots (K \cdot N)$ in der Gleichung (63b) durch die quantisierten Versionen $\underline{d}_{q,j}$, so ergibt sich der Zero-Forcing-Blockentzerrer mit quantisierter Rückkopplung (ZF-BDFE), geeignet auch für kohärente Empfangsantennen-Diversität, mit

$$\hat{\underline{d}}_{c,K \cdot N} = \sum_{j=1}^{K_a \cdot (N \cdot Q + W - 1)} \underline{M}_{K \cdot N, j}\,\underline{e}_j, \qquad (64a)$$

$$\hat{\underline{d}}_{c,n} + \sum_{j=n+1}^{K \cdot N} \underline{H}_{n,j}\,\hat{\underline{d}}_{q,j} = \sum_{j=1}^{K_a \cdot (N \cdot Q + W - 1)} \underline{M}_{n,j}\,\underline{e}_j, \quad n=1 \ldots K \cdot N - 1. \qquad (64b)$$

Mit

$$\left[\underline{x}\right]_j^i \overset{\text{def}}{=} \left(\underline{x}_i, \underline{x}_{i+1}\ldots \underline{x}_j\right)^T \quad i \le j \qquad (65a)$$

$$\left[\underline{x}\right]_{q,j}^{p,i} \overset{\text{def}}{=} \begin{pmatrix} \underline{X}_{p,i} & \underline{X}_{p,i+1} & \cdots & \underline{X}_{p,j} \\ \underline{X}_{p+1,i} & \underline{X}_{p+1,i+1} & \cdots & \underline{X}_{p+1,j} \\ \vdots & \vdots & \cdots & \vdots \\ \underline{X}_{q,i} & \underline{X}_{q,i+1} & \cdots & \underline{X}_{q,j} \end{pmatrix}^T, \quad p \le q, \quad i \le j, \qquad (65b)$$

ergibt sich aus der Gleichung (61b)

$$\left( \left[ I \right]_{K \cdot N, n}^{1,1}, \left[ \underline{H} - I \right]_{K \cdot N, K \cdot N}^{1, n+1} \right) \left( \left( \left[ \hat{\underline{d}}_c \right]_n^1 \right)^T, \left( \left[ \hat{\underline{d}}_q \right]_{K \cdot N}^{n+1} \right)^T \right)^T = \underline{M} \underline{e} . \qquad (66a)$$

$[\underline{H} - I]_{K \cdot N, K \cdot N}^{1, n+1}$ ist der Rückkopplungsoperator. Mit

$$\underline{S} = \left( \left[ I \right]_{K \cdot N, n}^{1,1}, \left[ \underline{H} - I \right]_{K \cdot N, K \cdot N}^{1, n+1} \right), \qquad (67a)$$

$$\hat{\underline{d}} = \left( \left( \left[ \hat{\underline{d}}_c \right]_n^1 \right)^T, \left( \left[ \hat{\underline{d}}_q \right]_{K \cdot N}^{n+1} \right)^T \right)^T, \qquad (67b)$$

wird die Struktur der Gleichung (36) erkannt. Beide durch den Gleichungssatz (67a) und (67b) gegebenen Größen $\underline{S}$ und $\underline{d}$ müssen jeden Zeitaugenblick $nT_S$ ein Update erfahren.

Das Signal-Stör-Verhältnis $\gamma(k,n)$ am Ausgang des ZF-BDFE-Entzerrers ist durch

$$\gamma(k, n) = E \left\{ \left| \underline{d}_n^{(k)} \right|^2 \right\} \cdot \left( \sigma_{N \cdot (k-1)+n, N \cdot (k-1)+n} \right)^2, \quad k = 1 \ldots N, \quad K, N \in \mathbb{N} \quad (68)$$

unter der Voraussetzung gegeben, daß alle vergangenen Entscheidungen, die rückgekoppelt werden, korrekt sind. Das Signal-Stör-Verhältnis $\gamma(k,n)$ nach Gleichung (68) ist allgemein größer als das durch die Gleichung (58) gegebene Signal-Stör-Verhältnis $\gamma(k,n)$ am Ausgang des ZF-BLE-Entzerrers. Im Falle inkorrekter vergangener Entscheidungen leidet die Arbeit des ZF-BDFE-Entzerrers jedoch an Fehlerausbreitungen. Wie bereits erwähnt worden ist, läßt sich die Arbeit des ZF-BDFE-Entzerrers durch die Anwendung einer Kanalsortierung verbessern.

Wie der lineare Zero-Forcing-Blockentzerrer (ZF-BLE), der auch für kohärente Empfangsantennen-Diversität geeignet ist, und der Zero-Forcing-Blockentzerrer mit quantisierter Rückkopplung (ZF-BDFE), ebenfalls für kohärente Empfangsantennen-Diversität ausgelegt, macht der sogenannte Minimum-Mean-Square-Error-Blockentzerrer (MMSE-BLE), der auch für kohärente Empfangsantennen-Diversität geeignet ist, Gebrauch von der Kenntnis über die in der Gleichung (27a) angegebene Matrix $\underline{A}$, über den Störsignalvektor $\underline{n}$ gemäß Gleichung (23) und über den gemäß Gleichung (34) eingeführten Empfangssignalvektor $\underline{e}$. Die quadratische Form

$$Q(\underline{d}_c) = E \left\{ (\underline{d}_c - \underline{d})^{*T} (\underline{d}_c - \underline{d}) \right\} \qquad (69a)$$

$$= E \left\{ \left\| \underline{d}_c - \underline{d} \right\|^2 \right\} \qquad (69b)$$

muß durch den MMSE-BLE-Entzerrer minimiert werden. Der Datenvektor $\underline{d}_c$ besteht aus den wertekontinuierlichen Elementen $\underline{d}_{c,n}$, $n=1 \ldots K \cdot N$. Die quadratische Form $Q(\underline{d}_c)$ nimmt ihr Minimum an, wenn $\underline{d}_c$ gleich dem wertekontinuierlichen und unbeeinflußten Schätzwert

$$\hat{\underline{d}}_c = \left(\underline{A}^{*T}\underline{R}_n^{-1}\underline{A} + \underline{R}_d^{-1}\right)^{-1}\underline{A}^{*T}\underline{R}_n^{-1}\underline{e} \qquad (70a)$$

$$= \left(\underline{I} + \left(\underline{R}_d\underline{A}^{*T}\underline{R}_n^{-1}\underline{A}\right)^{-1}\right)^{-1} \underbrace{\left(\underline{A}^{*T}\underline{R}_n^{-1}\underline{A}\right)^{-1}\underline{A}^{*T}\underline{R}_n^{-1}\underline{e}}_{\text{ZF-BLE}} \qquad (70b)$$

$$\underbrace{}_{\text{Wiener-Filter } \underline{W}_0}$$

$$= \underbrace{D\,\text{iag}\left\langle\left\{\underline{W}_0\right\}_{i,j}\right\rangle\underline{d}}_{\text{Nutzanteil}} + \underbrace{\left[\underline{W}_0 - D\,\text{iag}\left\langle\left\{\underline{W}_0\right\}_{i,j}\right\rangle\right]\underline{d}}_{\text{Intersymbol- und Vielfachzugriffinterferenzen}} + \qquad (70c)$$

$$\underbrace{\underline{W}_0\left(\underline{A}^{*T}\underline{R}_n^{-1}\underline{A}\right)^{-1}\underline{A}^{*T}\underline{R}_n^{-1}\underline{n}}_{\text{Störungen}}$$

ist, worin $\boldsymbol{I}$ die $K \cdot N \times K \cdot N$-Einheitsmatrix bezeichnet. Gemäß dem Gleichungssatz (70a) bis (70c) enthält der Schätzwert $\underline{d}_c$ einen Nutzterm, einen die Intersymbol- und Vielfachzugriffinterferenzen angehenden Term sowie einen Störungsterm und er stellt das Ausgangssignal des bereits abgehandelten ZF-BLE-Entzerrers dar, dem ein Wiener-Filter

$$\underline{W}_0 = \left(I + \left(\underline{R}_d\underline{A}^{*T}\underline{R}_n^{-1}\underline{A}\right)^{-1}\right)^{-1} \qquad (71)$$

nachgeschaltet ist. Infolge des Gleichungssatzes (70a) bis (70c) ist $\underline{S}$ identisch mit der $K \cdot N \times K \cdot N$-Binheitsmatrix $\boldsymbol{I}$, und läßt sich die Schätzmatrix $\underline{M}$ in Form von

$$\underline{M} = \underline{W}_0(\Sigma\,\underline{H})^{-1}(\underline{H}^{*T}\Sigma)^{-1}(\underline{L}\,\underline{A})^{*T}\underline{L} \qquad (72)$$

darstellen.

Entsprechend Gleichung (72) enthält der MMSE-BLE-Entzerrer ein dekorrelierendes signalangepaßtes Filter, welches für den Empfangssignalvektor $\underline{e}$ nach Gleichung (34) eingesetzt wird. Das Ausgangssignal des dekorrelierenden signalangepaßten Filters wird in den linearen Intersymbol- und Vielfachzugrifflöscher (=Canceller) $(\Sigma\,\underline{H})^{-1}$ eingespeist, dem das Wiener-Filter $\underline{W}_0$ nachgeschaltet ist. Da das Wiener-Filter den Erwartungswert der quadrierten Norm des Schätzfehlervektors $(\underline{d}_c-\underline{d})$ minimiert, führt die MMSE-BLE-Entzerrung zu einer besseren Leistung als die ZF-BLE-Entzerrung, was auch bei kohärenter Empfangsantennen-Diversität gilt. Außerdem läßt sich ohne weiteres aufzeigen, daß die Schätzfehler $(\underline{d}_{c,n} - \underline{d}_n)$ und die geschätzten Datensymbole $\underline{d}_{c,n}$ am Ausgang des MMSE-Entzerrers unkorreliert sind.

Das Signal-Stör-Verhältnis $\gamma(k,n)$ am Ausgang des MMSE-BLE-Entzerrers ist durch den Ausdruck

$$\gamma(k,n) = \frac{\text{E}\left\{\left|\underline{d}_n^{(k)}\right|^2\right\} \cdot \left|[\underline{W}_0]_{v,v}\right|^2}{[\underline{W}_0\underline{R}_d]_{v,v} - 2\text{Re}\left\{[\underline{W}_0\underline{R}_d]_{v,v} \cdot [\underline{W}_0]_{v,v}^*\right\} + \text{E}\left\{\left|\underline{d}_n^{(k)}\right|^2\right\} \cdot \left|[\underline{W}_0]_{v,v}\right|^2}$$

$$v = N \cdot (k-1) + n, \quad k=1\ldots K, \quad n=1\ldots N, \quad K,N \in \mathbb{N}, \qquad (73)$$

gegeben, der im allgemeinen größer als das in Gleichung (58) vorgestellte Signal-Stör-Verhältnisses $\gamma(k,n)$ am Ausgang des bereits vorher beschriebenen ZF-BLE-Entzerrers ist.

Im vorher erwähnten besonderen Fall des additiven weißen Gauß'schen Rauschens und unkorrelierter Datensymbole ergibt sich die Schätzmatrix $\underline{M}$ zu

$$\underline{M} = (I + \sigma^2 \cdot (\underline{A}^{*T}\underline{A})^{-1})^{-1} \cdot (\underline{A}^{*T}\underline{A})^{-1} \underline{A}^{*T}, \tag{74}$$

und die Gleichung (73) reduziert sich auf

$$\gamma(k,n) = \frac{[\underline{W}_0]_{v,v}}{1 - [\underline{W}_0]_{v,v}}, \quad v = N \cdot (k-1) + n, \quad k = 1 \ldots K, \quad n = 1 \ldots N, \quad K, N \in \mathbb{N}, \tag{75}$$

worin $\underline{W}_0 = (I + \sigma^2 \cdot (\underline{A}^{*T}\underline{A})^{-1})^{-1}$ ist.

Ausgehend vom vorstehend behandelten sogenannten MinimumMean-Square-Error-Blockentzerrer (MMSE-BLE), der für kohärente Empfangsantennen-Diversität ausgelegt ist, soll im folgenden der sogenannte Minimum-Mean-Square-Error-Blockentzerrer mit quantisierter Rückkopplung (MMSE-BDFE), der auch für kohärente Empfangsantennen-Diversität geeignet ist, in ähnlicher Weise abgeleitet werden, wie dies für den ZF-BDFE-Entzerrer bereits erfolgte. Mit der Cholesky-Zerlegung

$$\underline{A}^{*T}\underline{R}_n^{-1}\underline{A} + \underline{R}_d^{-1} = (\Sigma'\underline{H}')^{*T}\Sigma'\underline{H}', \tag{76}$$

bei welcher die Matrizen

$$\underline{H}' = \left(\underline{H}'_{i,j}\right), \quad \underline{H}'_{i,j} = 0 \,\forall i > j, \quad \underline{H}'_{i,i} = 1 \forall i, \quad i, j = 1 \ldots K \cdot N \tag{77a}$$

$$\Sigma' = \mathrm{Diag}\left\langle \sigma'_{i,i} \right\rangle, \quad \sigma'_{i,i} \in \mathbb{R}, \quad i = 1 \ldots K \cdot N \tag{77b}$$

benutzt werden, und mit der Schätzmatrix

$$\underline{M} = \Sigma'^{-1}(\underline{H}'^{*T}\Sigma')^{-1}(\underline{L}\,\underline{A})^{*T}\underline{L} \tag{78}$$

läßt sich der MMSE-BDFE-Entzerrer folgendermaßen darstellen:

$$\left([\underline{I}]_{K\cdot N,n}^{1,1}, [\underline{H}' - \underline{I}]_{K\cdot N,K\cdot N}^{1,n+1}\right)\left(\left([\hat{\underline{d}}_c]_n^1\right)^T, \left([\hat{\underline{d}}_q]_{K\cdot N}^{n+1}\right)^T\right)^T = \underline{M}\,\underline{e}. \tag{79}$$

Die Matrix $[\underline{H}' - \underline{I}]_{K\cdot N,K\cdot N}^{1,n+1}$ stellt den Rückkopplungsoperator dar. Mit

$$\underline{S} = \left([\underline{I}]_{K\cdot N,n}^{1,1}[\underline{H}' - \underline{I}]_{K\cdot N,K\cdot N}^{1,n+1}\right) \tag{80a}$$

$$\hat{\underline{d}} = \left(\left([\hat{\underline{d}}_c]_n^1\right)^T, \left([\hat{\underline{d}}_q]_{K\cdot N}^{n+1}\right)^T\right)^T \tag{80b}$$

wird die Struktur der Gleichung (36) erkannt.

Das Signal-Stör-Verhältnis γ(k,n) am Ausgang des MMSE-BDFE-Entzerrers ist durch

$$\gamma(k, n) = \frac{E\left\{\left|\underline{d}_n^{(k)}\right|^2\right\} \cdot \left|\left(\sigma'_{v,v}\right)^2 - \left[\left(\underline{H}'\underline{R}_d\right)^{-1}\right]_{v,v}\right|^2}{E\left\{\left|\underline{d}_n^{(k)}\right|^2\right\} \cdot \left|\left[\left(\underline{H}'\underline{R}_d\right)^{-1}\right]_{v,v}\right|^2 - 2\mathrm{Re}\left\{\left[\left(\underline{H}'\underline{R}_d\right)^{-1}\right]_{v,v}\right\} + \left(\sigma'_{v,v}\right)^2}$$

$$v = N \cdot (k-1) + n, \quad K = 1 \ldots K, \quad n = 1 \ldots N, \quad K, N \in \mathrm{I\!N}, \tag{81}$$

unter der Voraussetzung gegeben, daß alle vergangenen Entscheidungen, die rückgekoppelt wurden, korrekt sind. Das Signal-Stör-Verhältnis γ(k,n) nach Gleichung (81) für den MMSE-BDFE-Entzerrer ist im allgemeinen größer als das durch die Gleichung (68) gegebene Signal-Stör-Verhältnis γ(k,n) des ZF-BDFE-Entzerrers.

Zusammenfassend ist festzustellen, daß die durch die Erfindung entstandene CDMA-Systemstruktur derjenigen eines CDMA-Systems mit DS (Direct Sequence = Direktspreizungsfolge) gleicht. Das Einbringen des Mehrträgerverfahrens (MC = Multicarrier) wird durch geeignete Wahl der Spreizungscodes erreicht. Durch diese Vorgehensweise nach der Erfindung wird zum einen die Signalerzeugung in CDMA-Systemen mit DS und mit Mehrträgerverfahren (MC) vereinheitlicht und zum anderen die Erweiterung und Anwendung bereits bekannter Verfahren zur Mehrteilnehmerdetektion (JD = Joint Detection) ohne und mit Diversitätsempfang in CDMA-Systeme mit Mehrträgerverfahren ermöglicht.

Anwendungsgebiete für ein entsprechend der Erfindung ausgebildetes System sind außer allgemein dem Mobilfunk unter anderem z.B. der Richtfunk, der Satellitenfunk, der Seefunk, WLL (Wireless Local Loop = drahtlose Nebensprechanlage), WLAN (Wireless Local Area Network = drahtloses LAN), MBS (Mobile Broadband Systems = mobile Breitbandsysteme), FPLMTS (Future Public Land Mobile Telecommunication Systems, IMT-2000), UMTS (Universal Mobile Telecommunication Systems), PCS (Personal Communication Services), PCN (Personal Communication Networks), schnurlose Telefonanlagen (CT, Cordless Telephone), HDTV (High Definition Television), Kabelfernsehen (CATV, Cable TV), RITL (Radio in the Loop = Funknebensprechanlage), Indoor-Funk, PABX (Public Access Branch Exchange), Unterwasserfunk und Deep Space Communications.

## Patentansprüche

1. System zur Funkübertragung digitaler Signale zwischen mehreren Teilnehmerstationen und einer Basisstation unter Anwendung des sogenannten MC-CDMA, Multicarrier - Code Division Multiple Access = Mehrträger-Codemultiplex, -Verfahrens, bei dem eine Vielzahl von Nutzverbindungen in einem gemeinsamen HF-Frequenzband gleichzeitig abgewickelt wird, wozu von den K Teilnehmerstationen endlich lange Datenblöcke, die durch Datenvektoren $\underline{d}^{(k)} = \left(d_1^{(k)}, d_2^{(k)} \ldots d_N^{(k)}\right)^T$, $\underline{d}_n^{(k)} \in \mathbf{C}$, k=1...K, n=1...N, K,N ∈ IN, mit jeweils aus N m-ären komplexen Datensymbolen $\underline{d}_n^{(k)}$ mit einer Datensymbolperiodendauer $T_S$ repräsentiert werden können, unter Beaufschlagung mit einem der jeweiligen Teilnehmerstation k, k=1...K zugeteilten Spreizcode mit Q innerhalb des HF-Frequenzbandes gleichmäßig verteilten Subträgern übertragen und am Empfangsort unter Verwendung dieses Spreizcodes mittels einer CDMA-Detektoreinrichtung wieder decodiert werden,

   **dadurch gekennzeichnet,**

   daß die Anzahl der gleichzeitig von einer spezifischen Teilnehmerstation k übertragenen Datensymbole $\underline{d}_n^{(k)}$ Eins beträgt und somit alle Datensymbole $\underline{d}_n^{(k)}$ einer Teilnehmerstation aufeinanderfolgend übertragen werden, daß diese Übertragung unter Einsatz der Q Subträger der Bandbreite $B_S = B_U/Q = 1/T_S$ stattfindet, wobei die mit q, q=1... Q, numerierten Subträger jeweils eine einzige Mittenfrequenz $f_q$, q=1...Q, gemäß $f_q = \frac{q-1}{T_S}$, q = 1...Q aufweisen, daß jedes Datensymbol $\underline{d}_n^{(k)}$ einer Teilnehmerstation über alle Q Subträger der Bandbreite $B_S$ durch Verwendung einer teilnehmerspezifischen, aus sogenannten Chips $c_q^{(k)}$ bestehenden Signaturcodesequenz $\underline{c}^{(k)} = \left(c_1^{(k)}, c_2^{(k)} \ldots c_Q^{(k)}\right)^T$ $\underline{c}_q^{(k)} \in \mathbf{C}$, k=1...K, q=1...Q, K,Q ∈ IN, gespreizt wird, wobei jedes Chip einem besonderen Subträger zugeordnet ist, daß eine Teilnehmerstation k, k=1...K, ein linear moduliertes Signal überträgt, das im äquivalenten Tiefpaßbereich durch

$$\underline{d}^{(k)}(t) = \sum_{n=1}^{N} \underline{d}_n^{(k)} \cdot \underline{c}^{(k)}(t - [n-1]T_s; \underline{c}^{(k)})$$

gegeben ist, daß die lineare MC-CDMA-Spreizmodulation durch mit einer Rate $1/T_c$ abgenommene Abtastungen von $c^{(k)}(t;\underline{c}^{(k)})$ gebildet wird, wobei die durch diese Abtastungen erzeugten Abtastwerte $\underline{\zeta}_q^{(k)}$, $q=1\ldots Q$, $K$ Vektoren $\underline{\zeta}^{(k)} = \left(\underline{\zeta}_1^{(k)}, \underline{\zeta}_2^{(k)} \ldots \underline{\zeta}_Q^{(k)}\right)^T$, $\underline{\zeta}_q^{(k)} \in \mathbf{C}$, $k=1\ldots K$, $q=1\ldots Q$, $K$, $Q \in \mathbf{IN}$ hervorbringen, daß mit einer Matrix

$$\underline{D} = (\underline{D}_{\alpha,\beta}), \quad \underline{D}_{\alpha,\beta} = \frac{1}{\sqrt{Q}} \exp\left\{j \frac{2\pi}{Q}(\alpha-1)(\beta-1)\right\},$$

$\alpha$, $\beta=1\ldots Q$ der inversen diskreten Fourier-Transformation eine Beziehung zwischen den Vektoren $\underline{\zeta}^{(k)}$ und den Spreizcodevektoren $\underline{c}^{(k)}$ durch die Gleichung $\underline{\zeta}^{(k)} = \underline{D}\,\underline{c}^{(k)}$ gegeben ist, wobei die Vektormatrix $\underline{\zeta}^{(k)}$ $Q$ Spaltenvektoren $\underline{\delta}^{(q)} = (\underline{\delta}_1^{(q)}, \underline{\delta}_2^{(q)}\ldots\underline{\delta}_Q^{(q)})^T$,

$$\underline{\delta}_\alpha{}^{(q)} = \frac{1}{\sqrt{Q}} \exp\left\{j \frac{2\pi}{Q}(\alpha-1)(q-1)\right\},$$

$\alpha=1\ldots Q$, enthält, so daß sich $\underline{D} = (\underline{\delta}^{(1)}, \underline{\delta}^{(2)}\ldots\underline{\delta}^{(Q)})$ und damit $\underline{\zeta}^{(k)} = (\underline{c}_1^{(k)}\underline{\delta}^{(1)}+\underline{c}_2^{(k)}\underline{\delta}^{(2)}+\ldots+\underline{c}_Q^{(k)}\underline{\delta}^{(Q)})$ ergibt, daß in Anbetracht der Tatsache, daß jedes Chip $\underline{c}_q^{(k)}$ einem besonderen Subträger q zugeordnet ist, die Gleichung $\underline{\zeta}^{(k)} = \underline{D}\,\underline{c}^{(k)}$ so zu interpretieren ist, daß die Spalten $\underline{\delta}^{(q)}$, $q=1\ldots Q$, der Matrix $\underline{D}$ die $Q$ Subträger und die Zeilen der Matrix $\underline{D}$ die $Q$ Zeitmomente innerhalb der Datensymbolperiodendauer $T_S$ darstellen, während welcher Abtastwerte abgenommen werden, und daß das Ergebnis der Gleichung $\underline{\zeta}^{(k)} = \underline{D}\,\underline{c}^{(k)}$ somit ein Vektor $\underline{\zeta}^{(k)}$ mit Elementen $\underline{\zeta}_q^{(k)}$ ist, die sich aus einer linearen Kombination der Chips $\underline{c}_q^{(k)}$ ergeben.

2. System nach Anspruch 1,
   **gekennzeichnet** durch die Anwendung bei einem CDMA-System mit Mehrträgerverfahren und kohärenter Empfangsantennen-Diversität.

3. System nach Anspruch 1 oder 2,
   **dadurch gekennzeichnet,**
   daß in einer CDMA-Detektoreinrichtung der Empfangsseite einer $K_a$ Empfangsantennen aufweisenden Station zur Bestimmung von Schätzwerten $\underline{d}^{(k)} = \left(\underline{d}_1^{(k)}, \underline{d}_2^{(k)}\ldots\underline{d}_N^{(k)}\right)^T$, $\underline{d}^{(k)} \in \mathbf{C}$, $k=1\ldots K$, $n=1\ldots N$, $K,N \in \mathbf{IN}$, der Datensymbolsequenzen $\underline{d}^{(k)}$ ein Empfangssignalvektor $\underline{e}$, der sich aus $\underline{e} = (\underline{e}^{(1)T},\underline{e}^{(2)T}\ldots\underline{e}^{(K_a)T})^T = (\underline{e}_1,\underline{e}_2\cdots_{K_a\cdot(N\cdot Q+W-1)})^T = \underline{A}\,\underline{d} + \underline{n}$, $K_a$, $N$, $Q$, $W \in \mathbf{IN}$, ergibt, worin die kombinierte $K_a\cdot(N\cdot Q+W-1)\text{x}K\cdot N$-Kanalmatrix $\underline{A}$ alle $K\cdot K_a$ kombinierten Kanalimpulsantworten

$$\underline{b}^{(k,k_a)} = \left(\underline{b}_1^{(k,k_a)}, \underline{b}_2^{(k,k_a)}\ldots\underline{b}_{Q+W-1}^{(k,k_a)}\right)^T = \underline{h}^{(k,k_a)} * \underline{\zeta}^{(k)},$$

$\underline{h}^{(k,k_a)} \in \mathbf{C}$, $k = 1\ldots K$, $k_a = 1\ldots K_a$, $l = 1\ldots Q + W - 1$, $K$, $K_a$, $Q$, $W \notin \mathbf{IN}$, $W$ = Zahl der komplexen Abtastwerte $\underline{h}^{(k,k_a)}$ enthält, und worin $K_a$ verschiedene Störsequenzen durch den kombinierten Störvektor $\underline{n} = (\underline{n}^{(1)T},\underline{n}^{(2)T}\ldots \underline{n}^{(K_a)T})^T = (\underline{n}_1,\underline{n}_2\ldots\underline{n}_{K_a\cdot(N\cdot Q+W-1)})^T$, $K_a$, $N$, $Q$, $W \in \mathbf{IN}$ und die Datensequenz $\underline{d}$ durch den Datensymbolvektor $\underline{d} = (\underline{d}^{(1)T}, \underline{d}^{(2)T}\ldots\underline{d}^{(K)T})^T = (\underline{d}_1, \underline{d}_2\ldots\underline{d}_{K\cdot N})^T$, $K,N \in \mathbf{IN}$ dargestellt werden.

4. System nach Anspruch 3,
   **dadurch gekennzeichnet,**
   daß empfangsseitig eine CDMA-Detektoreinrichtung zur Mehrteilnehmerdetektion vorgesehen ist, daß diese Detektoreinrichtung suboptimal arbeitet und entweder auf einer linearen Entzerrung oder auf einer Entscheidungsrückkopplungsentzerrung beruht, daß die Detektoreinrichtung ein dekorrelierendes signalangepaßtes Filter enthält, daß das Arbeitsprinzip der Detektoreinrichtung unter der Voraussetzung, daß der durch $\underline{e} = (\underline{e}^{(1)T},\underline{e}^{(2)T}\ldots\underline{e}^{(K_a)T})^T = (\underline{e}_1,\underline{e}_2\cdots_{K_a\cdot(N\cdot Q+W-1)})^T = \underline{A}\,\underline{d} + \underline{n}$, $K_a$,$N$,$Q$,$W \in \mathbf{IN}$, definierte Empfangssignalvektor $\underline{e}$ beim Empfänger bekannt ist, durch einen Satz von Gleichungen $\underline{S}\,\underline{d} = \underline{M}\,\underline{e}$ angegeben ist, worin $\underline{S} = (\underline{S}_{i,j})$, $i,j = 1\ldots K\cdot N$, eine quadratische Matrix mit $K\cdot N$ Zeilen und $K\cdot N$ Spalten, $\underline{M} = (\underline{M}_{i,j})$, $i=1\ldots K\cdot N$, $j=1\ldots N\cdot Q+W-1$, eine $K\cdot N\text{x}K_a\cdot(N\cdot Q+W-1)$-Schätzmatrix und $\underline{d} = (\underline{d}_1, \underline{d}_2\ldots\underline{d}_{K\cdot N})^T$ der Schätzwert des in der Gleichung für den Empfangssignalvektor $\underline{e}$ definierten Datenvektors $\underline{d}$ ist.

5. System nach Anspruch 4,
   **dadurch gekennzeichnet,**

daß als CDMA-Detektoreinrichtung ein linearer Datenblockentzerrer mit nachfolgender Quantisierungsstufe vorgesehen ist, daß im Blockentzerrer wertekontinuierliche Schätzwerte der Datensymbole ermittelt werden, die zu Vektoren zusammengefaßt werden, und daß in der Quantisierungsstufe anschließend wertediskrete Schätzwerte der Datensymbole durch Quantisieren der wertekontinuierlichen Schätzwerte gewonnen werden.

6. System nach Anspruch 5,
**dadurch gekennzeichnet,**
daß als linearer Blockentzerrer der sogenannte lineare Zero-Forcing-Blockentzerrer verwendet wird.

7. System nach Anspruch 5,
**dadurch gekennzeichnet,**
daß als linearer Blockentzerrer der sogenannte Minimum-Mean-Square-Error-Blockentzerrer verwendet wird.

8. System nach Anspruch 4,
**dadurch gekennzeichnet,**
daß als CDMA-Detektoreinrichtung ein Datenblockentzerrer mit quantisierter Rückkopplung vorgesehen ist.

9. System nach Anspruch 8,
**dadurch gekennzeichnet,**
daß als Datenblockentzerrer ein sogenannter Zero-Forcing-Blockentzerrer mit quantisierter Rückkopplung vorgesehen ist.

10. System nach Anspruch 8,
**dadurch gekennzeichnet,**
daß als Datenblockentzerrer ein sogenannter Minimum-Mean-Square-Error-Blockentzerrer mit quantisierter Rückkopplung (MMSE-BDFE, Minimum Mean Square Error Block Decision Feedback Equalizer) vorgesehen ist.

11. System nach einem der vorhergehenden Ansprüche,
**dadurch gekennzeichnet,**
daß auf der Empfangsseite ein digitaler Signalprozessor vorgesehen ist, der die CDMA-Detektoreinrichtung enthält.

12. System nach Anspruch 11,
**dadurch gekennzeichnet,**
daß der Signalprozessor noch Kanalschätzer enthält.

13. System nach Anspruch 11 oder 12,
**dadurch gekennzeichnet,**
daß als Signalprozessor ein Mikroprozessor vorgesehen ist.

14. System nach einem der vorhergehenden Ansprüche,
**gekennzeichnet** durch die Verwendung im Rahmen eines hybriden Vielfachzugriffverfahrens, das in einer Kombination von Codemultiplex mit Mehrträgerverfahren, Frequenzmultiplex und Zeitmultiplex besteht.

15. System nach einem der vorhergehenden Ansprüche,
**dadurch gekennzeichnet,**
daß auf der Sendeseite Antennendiversität vorgesehen ist.

16. System nach einem der vorhergehenden Ansprüche,
**dadurch gekennzeichnet,**
daß eine adaptive Diversität mit Richtantennen vorgesehen ist.

17. System nach einem der Ansprüche 1 bis 15,
**dadurch gekennzeichnet,**
daß eine nichtadaptive Diversität mit Richtantennen vorgesehen ist.

18. System nach einem der vorhergehenden Ansprüche,
**gekennzeichnet** durch eine Erweiterung der bislang linearen Datenmodulation auf nichtlineare Datenmodulation.

**19.** System nach einem der vorhergehenden Ansprüche,
**gekennzeichnet** durch eine Erweiterung von linearer Spreizungsmodulation auf nichtlineare Spreizungsmodulation.

**20.** System nach einem der vorhergehenden Ansprüche,
**gekennzeichnet** durch eine Codespreizung mit orthogonalen Folgen, entweder in der Aufwärtsstrecke oder in der Abwärtsstrecke oder in beiden Richtungen.

**21.** System nach einem der Ansprüche 1 bis 19,
**gekennzeichnet** durch eine Codespreizung mit nichtorthogonalen Folgen, entweder in der Aufwärtsstrecke oder in der Abwärtsstrecke oder in beiden Richtungen.

**22.** System nach einem der vorhergehenden Ansprüche,
**gekennzeichnet** durch die Verwendung binärer Spreizungsfolgen.

**23.** System nach einem der Ansprüche 1 bis 21,
**gekennzeichnet** durch die Verwendung nicht binärer Spreizungsfolgen, beispielsweise quaternärer Spreizungsfolgen.

**24.** System nach einem der vorhergehenden Ansprüche,
**gekennzeichnet durch** eine Anwendung auf dem Gebiet des Mobilfunks.

**25.** System nach einem der Ansprüche 1 bis 23,
**gekennzeichnet durch** eine Anwendung auf dem Gebiet des Richtfunks.

**26.** System nach einem der Ansprüche 1 bis 23,
**gekennzeichnet durch** eine Anwendung auf dem Gebiet des Satellitenfunks.

**27.** System nach einem der Ansprüche 1 bis 23,
**gekennzeichnet durch** eine Anwendung bei Seefunk.

**28.** System nach einem der Ansprüche 1 bis 23,
**gekennzeichnet durch** eine Anwendung bei einem schnurlosen Telefon.

**29.** System nach einem der Ansprüche 1 bis 23,
**gekennzeichnet durch** eine Anwendung bei Kabel-TV.

**30.** System nach einem der Ansprüche 1 bis 23,
**gekennzeichnet durch** eine Anwendung bei Unterwasserfunk.

**Claims**

**1.** System for transmitting digital signals by radio between a plurality of subscriber stations and a base station using the so-called MC-CDMA, Multicarrier - Code Division Multiple Access, method in which a plurality of useful links are processed simultaneously in a common RF frequency band, for which purpose data blocks of finite length, which can be represented by data vectors $\underline{d}^{(k)} = \left( d_1^{(k)}, d_2^{(k)} ... d_N^{(k)} \right)^{\mathsf{T}}$, $\underline{d}^{(k)} \in \mathbf{C}$, $k=1...K$, $n=1...N$, $K,N \in$ IN composed in each case of $N$ complex data symbols $\underline{d}_n^{(k)}$ to the base $m$ with a data symbol period length $T_s$, are transmitted by the K subscriber stations with the application of a spread code, assigned to the respective subscriber station $k$, $k=1...K$, with $Q$ subcarriers distributed uniformly within the RF frequency band and are decoded again at the reception site using this spread code and by means of a CDMA detector device, characterized in that the number of data symbols $\underline{d}_n^{(k)}$ transmitted simultaneously by a specific subscriber station $k$ is one and thus all the data symbols $\underline{d}_n^{(k)}$ of a subscriber station are transmitted successively, in that this transmission takes place using the $Q$ subcarriers of the bandwidth $B_s = B_U/Q = 1/T_s$, the subcarriers numbered with $q$, $q=1...Q$ each having a single centre of frequency $f_q$, $q=1...Q$, in accordance with $f_q = \frac{q-1}{T_s}$, $q = 1... Q$, in that each data symbol $\underline{d}_n^{(k)}$ of a subscriber station is spread over all the $Q$ subcarriers of the bandwidth $B_s$ by using a subscriber-specific signature code sequence $\underline{c}^{(k)} = \left( c_1^{(k)}, c_2^{(k)} ... c_Q^{(k)} \right)^{\mathsf{T}}$, $\underline{c}_q^{(k)} \in \mathbf{C}$, $k=1...K$, $q=1...Q$, $K,Q \in$ IN composed of so-called chips $\underline{c}_q^{(k)}$, each chip being assigned to a particular subcarrier, in that a subscriber station $k$, $k=1...K$ transmits a linearly modulated signal which is given in the equivalent lowpass filter region by

$$d^{(k)}(t) = \sum_{n=1}^{N} d_n^{(k)} \cdot c^{(k)}(t - [n-1]T_s; c^{(k)}),$$

in that the linear MC-CDMA spread modulation is formed by samplings of $c^{(k)}$ $(t;c^{(k)})$ made at a rate $1/T_c$, the sampled values $\zeta_q^{(k)}$, $q=1...Q$, $K$ produced by means of these samplings givina rise to vectors $\zeta^{(k)} = \left( \zeta_1^{(k)}, \zeta_2^{(k)}...\zeta_Q^{(k)} \right)^T$, $\zeta_q^{(k)} \in \mathbf{C}$, $k=1...K$, $q=1...Q$, $K$, $Q \in$ IN, in that a relation between the vectors $\zeta^{(k)}$ and the spread code vectors $c^{(k)}$ is given by means of the equation $\zeta^{(k)} = D\ c^{(k)}$ with a matrix

$$D = (D_{\alpha,\beta}), \quad D_{\alpha,\beta} = \frac{1}{\sqrt{Q}} \exp\left\{ j \frac{2\pi}{Q} (\alpha - 1)(\beta - 1) \right\}, \quad \alpha,\beta=1...Q$$

of the inverse discrete Fourier transformation, the vector matrix $\zeta^{(k)}$ containing $Q$ column vectors

$$\delta^{(q)} = (\delta_1^{(q)}, \delta_2^{(q)}...\delta_Q^{(q)})^T,$$

$$\delta_{\alpha}^{(q)} = \frac{1}{\sqrt{Q}} \exp\left\{ j \frac{2\pi}{Q} (\alpha - 1)(q - 1) \right\},$$

$\alpha=1... Q$, so that $D = (\delta^{(1)}, \delta^{(2)}...\delta^{(Q)})$ and thus $\zeta^{(k)} = (c_1^{(k)}\delta^{(1)}+c_2^{(k)}\delta^{(2)}+...+c_Q^{(k)}\delta^{(Q)})$ is obtained, in that, in view of the fact that each chip $c_q^{(k)}$ is assigned to a particular subcarrier $q$, the equation $\zeta^{(k)} = D\ c^{(k)}$ is to be interpreted in such a way that the columns $\delta^{(q)}$, $q=1...Q$ of the matrix $D$ represent the $Q$ subcarriers and the rows of the matrix $D$ represent the $Q$ time moments within the data symbol period length $T_s$ during which sampled values are taken, and in that the result of the equation $\zeta^{(k)} = D\ c^{(k)}$ is thus a vector $\zeta^{(k)}$ with elements $\zeta^{(k)}$ which result from a linear combination of the chips $c_q^{(k)}$.

2. System according to Claim 1, characterized by the application in a CDMA system with multicarrier method and coherent receiver antenna diversity.

3. System according to Claim 1 or 2, characterized in that in a CDMA detector device at the receive end of a station, having $K_a$ receiver antennas, for determining the estimated values $d^{(k)} = \left( d_1^{(k)}, d_2^{(k)}...d_N^{(k)} \right)^T$, $d_n^{(k)} \in \mathbf{C}$, $k=1...K$, $n=1...N$,

   $K,N \in$ IN, of the data symbol sequences $d^{(k)}$ a received signal vector $e$, which results from $e = (e^{(1)T},e^{(2)T}...e^{(K_a)T})^T = (e_1,e_2...e_{K_a\cdot(N\cdot Q+W-1)})^T = A\ d + n$, $K_a$, $N$, $Q$, $W \in$ IN, where the combined $K_a\cdot(N\cdot Q+W-1)\times K\cdot N$ channel matrix $A$ contains all the $K\cdot K_a$ combined channel pulse responses

$$b^{(k,k_a)} = \left( b_1^{(k,k_a)}, b_2^{(k,k_a)}...b_{Q+W-1}^{(k,k_a)} \right)^T = h^{(k,k_a)} * \zeta^{(k)},$$

   $h_w^{(k,k_a)} \in \mathbf{C}$, $k = 1... K$, $k_a = 1...K_a$, $l = 1...Q + W - 1$, $K$, $K_a$, $Q$, $W \notin$ **IN**,
   $W$ = number of complex sampled values $h_w^{(k,k_a)}$, and where $K_a$ various interference sequences are represented by the combined interference vector $n = (n^{(1)T},n^{(2)T}...n^{(K_a)T})^T = (n_1,n_2...n_{K_a\cdot(N\cdot Q+W-1)})^T$, $K_a$,$N$, $Q$, $W \in$ **IN** and the data sequence $d$ is represented by the data symbol vector $d = (d^{(1)T}, d^{(2)T}...d^{(K)T})^T = (d_1,d_2...d_{K\cdot N})^T$, $K,N \in$ **IN** .

4. System according to Claim 3, characterized in that a CDMA detector device for multisubscriber detection is provided at the receive end, in that this detector device operates suboptimally and is based either on a linear equalization or on a decision feedback equalization, in that the detector device contains a decorrelating, signal-matched filter, in that, on the proviso that the received signal vector $e$ defined by

$$\underline{e} = (\underline{e}^{(1)T}, \underline{e}^{(2)T}...\underline{e}^{(K_a)T})^T = (\underline{e}_1, \underline{e}_2 \cdots {}_{-K_a \cdot (N \cdot Q + W-1)})^T = \underline{A}\,\underline{d} + \underline{n},$$

$K_a, N, Q, W \in_\wedge IN$, is known at the receiver, the operating principle of the detector device is specified by a set of equations $\underline{\mathbf{S}}\underline{d} = \underline{\mathbf{M}}\underline{e}$, where $\underline{\mathbf{S}} = (\underline{S}_{i,j})$, $i,j = 1...K \cdot N$, a quadratic matrix with $K \cdot N$ rows and $K \cdot N$ columns, $\underline{M} = (\underline{M}_{i,j})$, $i=1...K \cdot N$, $j=1...N \cdot Q + W-1$, a $K \cdot N \times K_a \cdot (N \cdot Q + W-1)$ estimated matrix and $\underline{d} = (\underline{d}_1, \underline{d}_2 ... \underline{d}_{K \cdot N})^T$ is the estimated value of the data vector $\underline{d}$ defined in the equation for the received signal vector $\underline{e}$.

5. System according to Claim 4, characterized in that a linear data block equalizer with the following quantization stage is provided as CDMA detector device, in that value-continuous estimated values of the data symbols are determined in the block equalizer and are combined to form vectors, and in that value-discrete estimated values of the data symbols are acquired in the quantization stage by quantizing the value-continuous estimated values.

6. System according to Claim 5, characterized in that the so-called linear zero forcing block equalizer is used as linear block equalizer.

7. System according to Claim 5, characterized in that the so-called minimum mean square error block equalizer is used as the linear block equalizer.

8. System according to Claim 4, characterized in that a data block equalizer with quantized feedback is provided as CDMA detector device.

9. System according to Claim 8, characterized in that a so-called zero forcing block equalizer with quantized feedback is provided as data block equalizer.

10. System according to Claim 8, characterized in that a so-called minimum mean square error block equalizer with quantized feedback (MMSE-BDFE, Minimum Mean Square Error Block Decision Feedback Equalizer) is provided as data block equalizer.

11. System according to one of the preceding claims, characterized in that a digital signal processor which contains the CDMA detector device is provided at the receive end.

12. System according to Claim 11, characterized in that the signal processor also contains channel estimators.

13. System according to Claim 11 or 12, characterized in that a microprocessor is provided as signal processor.

14. System according to one of the preceding claims, characterized by the use within the framework of a hybrid multiple access method which consists of a combination of Code Division Multiple Access with multicarrier method, Frequency Division Multiple Access and Time Division Multiple Access.

15. System according to one of the preceding claims, characterized in that antenna diversity is provided at the receive end.

16. System according to one of the preceding claims, characterized in that an adaptive diversity with directional antennas is provided.

17. System according to one of Claims 1 to 15, characterized in that a non-adaptive diversity with directional antennas is provided.

18. System according to one of the preceding claims, characterized by an expansion of the data modulation, which has been linear hitherto, to non-linear data modulation.

19. System according to one of the preceding claims, characterized by an expansion of linear spread modulation to non-linear spread modulation.

20. System according to one of the preceding claims, characterized by a code spread with orthogonal sequences, either in the uplink or in the downlink or in both directions.

**21.** System according to one of Claims 1 to 19, characterized by a code spread with non-orthogonal sequences, either in the uplink or in the downlink or in both directions.

**22.** System according to one of the preceding claims, characterized by the use of binary spread sequences.

**23.** The system according to one of Claims 1 to 21, characterized by the use of non-binary spread sequences, for example quaternary spread sequences.

**24.** System according to one of the preceding claims, characterized by an application in the field of mobile radio.

**25.** System according to one of Claims 1 to 23, characterized by an application in the field of microwave radio.

**26.** System according to one of Claims 1 to 23, characterized by an application in the field of satellite radio.

**27.** System according to one of Claims 1 to 23, characterized by an application in marine radio.

**28.** System according to one of Claims 1 to 23, characterized by an application in a cordless telephone.

**29.** System according to one of Claims 1 to 23, characterized by an application in cable television.

**30.** System according to one of Claims 1 to 23, characterized by an application in submarine radio.

**Revendications**

**1.** Système pour la transmission par radio de signaux numériques entre plusieurs stations d'abonnés et une station de base en utilisant le procédé dit MC-CDMA (Multicarrier - Code Division Multiple Access = multiplex par répartition de code et à porteuses multiples), dans lequel plusieurs liaisons utiles sont développées simultanément dans une bande de fréquences HF commune, les K stations d'abonnés transmettant des blocs de données de longueur finie qui peuvent être représentés par des vecteurs de données $\underline{d}(k) = (\underline{d}_1(k), \underline{d}_2(k), ..., \underline{d}_N{}^{(k)})^T$, $\underline{d}_n{}^{(k)} \in C$, k =1 ... K, n = 1 ... N, K, N $\in$ IN, avec à chaque fois N symboles de données complexes maires $\underline{d}_n{}^{(k)}$ ayant une durée de période de symbole de données $T_S$, avec une application d'un code d'étalement, attribué à la station d'abonné respective k, k = 1 ... K, avec Q sous-porteuses réparties régulièrement à l'intérieur de la bande de fréquences HF, et ces blocs de données étant de nouveau décodés sur le lieu de réception en utilisant ce code d'étalement au moyen d'un dispositif détecteur CDMA,

caractérisé par le fait

que le nombre des symboles de données $\underline{d}_n{}^{(k)}$ transmis simultanément par une station d'abonné spécifique k vaut 1 et donc tous les symboles de données $\underline{d}_n{}^{(k)}$ d'une station d'abonné sont transmis successivement, que cette transmission a lieu en utilisant les Q sous-porteuses de la largeur de bande $B_S = B_u / Q = 1 / T_S$, les sous-porteuses numérotées avec q, q = 1 ... Q, ayant à chaque fois une seule fréquence centrale $f_q$, q = 1 ... Q, selon $f_q = \frac{q-1}{T_s}$, q = 1...Q, que chaque symbole de données $\underline{d}_n{}^{(k)}$ d'une station d'abonné est étalé sur toutes les Q sous-porteuses de la largeur de bande $B_S$ par l'utilisation d'une séquence de codes de signatures $\underline{c}^{(k)} = (\underline{c}_1{}^{(k)}, \underline{c}_2{}^{(k)}, ..., \underline{c}_Q{}^{(k)})^T$, $\underline{c}_q{}^{(k)} \in C$, k = 1 ... K, q = 1 ... Q, K, Q $\in$ IN, spécifique à l'abonné et constitué d'éléments dits puces $\underline{c}_q{}^{(k)}$, chaque puce étant associée à une sous-porteuse particulière, qu'une station d'abonné k, k = 1 ... K, transmet un signal modulé de façon linéaire qui est donné dans le domaine passe-bas équivalent par

$$\underline{d}^{(k)}(t) = \sum_{n=1}^{N} \underline{d}_n{}^{(k)} \cdot \underline{c}^{(k)}(t - [n - 1] T_S ; \underline{c}^{(k)}),$$

que la modulation par étalement linéaire MC-CDMA est formée par des échantillonnages de $\underline{c}^{(k)}(t ; \underline{c}^{(k)})$ pris avec un taux $1/T_C$, les valeurs échantillonnées $\underline{\zeta}_q{}^{(k)}$, q = 1 ... Q, produites par ces échantillonnages, donnant K vecteurs $\underline{\zeta}^{(k)} = (\underline{\zeta}_1{}^{(k)}, \underline{\zeta}_2{}^{(k)}, ..., \underline{\zeta}_Q{}^{(k)})^T$, $\underline{\zeta}_q{}^{(k)} \in C$, k =1 ... K, q =1 ... Q, K, Q $\in$ IN, que, avec une matrice

$$\underline{D} \; = \; (D_{\alpha,\beta}) \, , \quad D_{\alpha,\beta} \; = \; \frac{1}{\sqrt{Q}} \exp\left\{ j\, \frac{2\pi}{Q}(\alpha - 1)(\beta - 1) \right\},$$

... Q, de la transformation de Fourier discrète inverse, une relation entre les vecteurs $\underline{\zeta}^{(k)}$ et les vecteurs de code d'étalement $\underline{c}^{(k)}$ est donnée par l'équation $\underline{\zeta}^{(k)} = \underline{D} \, \underline{c}^{(k)}$, le vecteur matrice $\underline{\zeta}^{(k)}$ contenant Q vecteurs colonnes $\underline{\delta}^{(q)}$ = $(\underline{\delta}_1{}^{(q)}, \underline{\delta}_2{}^{(q)}, ..., \underline{\delta}_Q{}^{(q)})^{\mathsf{T}}$,

$$\underline{\delta}_{\alpha}{}^{(q)} = \frac{1}{\sqrt{Q}} \exp\left\{ j\, \frac{2\pi}{Q}(\alpha - 1)(q - 1) \right\},$$

$\alpha = 1...Q$, de manière à obtenir $\underline{D} = (\underline{\delta}^{(1)}, \underline{\delta}^{(2)}...\underline{\delta}^{(Q)})$ et donc $\underline{\zeta}^{(k)} = (\underline{c}_1{}^{(k)}\underline{\delta}^{(1)} + \underline{c}_2{}^{(k)}\underline{\delta}^{(2)} + ... + \underline{c}_Q{}^{(k)}\underline{\delta}^{(Q)})$, que, eu égard au fait que chaque puce $\underline{c}_q{}^{(k)}$ est associée à une sous-porteuse particulière q, l'équation $\underline{\zeta}^{(k)} = \underline{D} \, \underline{c}^{(k)}$ doit être interprétée de telle sorte que les colonnes $\underline{\delta}(q)$, q = 1 ... Q, de la matrice $\underline{D}$ représentent les Q sous-porteuses et les lignes de la matrice $\underline{D}$ les Q instants à l'intérieur de la durée de période de symbole de données $T_S$ pendant lesquels des valeurs échantillonnées sont prises, et que le résultat de l'équation $\underline{\zeta}^{(k)} = \underline{D} \, \underline{c}^{(k)}$ est donc un vecteur $\underline{\zeta}^{(k)}$ avec des éléments $\underline{\zeta}_q{}^{(k)}$ qui résultent d'une combinaison linéaire des puces $\underline{c}_q{}^{(k)}$.

**2.** Système selon la revendication 1,
caractérisé par une utilisation dans le cas d'un système CDMA avec procédés à porteuses multiples et avec diversité d'antennes réceptrices cohérente.

**3.** Système selon la revendication 1 ou 2,
caractérisé par le fait que, dans un dispositif détecteur CDMA du côté récepteur d'une station comportant $K_a$ antennes réceptrices, pour la détermination de valeurs estimées $(\underline{d}^{(k)} = \left( d_1{}^{(k)}, d_2{}^{(k)}...d_N{}^{(k)} \right)^{\mathsf{T}}, \underline{d}^{(k)} \in \mathbf{C}, k=1...K, n=1...N, K,N \in \mathbf{IN}$, des séquences de symboles de données $\underline{d}^{(k)}$, un vecteur de signal reçu $\underline{e}$ qui résulte de $\underline{e}$ = $(\underline{e}^{1(\mathsf{T})}, \underline{e}^{2(\mathsf{T})}, ..., \underline{e}^{Ka(\mathsf{T})})^{\mathsf{T}} = (\underline{e}_1, \underline{e}_2, ..., \underline{e}_{Ka.(N.Q + W - 1)})^{\mathsf{T}} = \underline{A} \, \underline{d} + \underline{n}$, $K_a$, N, Q, W $\in$ IN, la matrice de canal combinée $\underline{A}$ de dimension $K_a \cdot (N \cdot Q + W - 1)$ x $K \cdot N$ contenant toutes les $K \cdot K_a$ réponses impulsionnelles de canal combinées

$$\underline{b}^{(k,k_a)} = \left( \underline{b}_1{}^{(k,k_a)}, \underline{b}_2{}^{(k,k_a)}...\underline{b}_{Q+W\text{-}1}{}^{(k,k_a)} \right)^{\mathsf{T}} = \underline{h}^{(k,k_a)} * \underline{\zeta}^{(k)},$$

$\underline{h}_w{}^{(k,k_a)} \in \mathbf{C}, \; k = 1...K, \; k_a = 1...K_a, \; l = 1...Q + W - 1, K, K_a, Q, W \in \mathbf{IN}$,
W = nombre des valeurs échantillonnées complexes $h_w(k, ka)$ et $K_a$ séquences parasites différentes étant représentées par le vecteur parasite combiné $\underline{n} = (\underline{n}^{(1)\mathsf{T}}, \underline{n}^{(2)\mathsf{T}}, ..., \underline{n}^{(Ka)\mathsf{T}})^{\mathsf{T}} = (\underline{n}_1, \underline{n}_2 ..., \underline{n}_{Ka.(N.Q + W - 1)})^{\mathsf{T}}, K_a$, N, Q, W $\in$ IN et la séquence de données $\underline{d}$ étant représentée par le vecteur de symboles de données $\underline{d} = (\underline{d}^{(1)\mathsf{T}}, \underline{d}^{(2)\mathsf{T}}, ..., \underline{d}^{(K)\mathsf{T}})^{\mathsf{T}} = (\underline{d}_1, \underline{d}_2 ..., dK.N)^{\mathsf{T}}, K, N \in$ IN.

**4.** Système selon la revendication 3,
caractérisé par le fait que, côté réception, un dispositif détecteur CDMA est prévu pour la détection d'abonnés multiples, que ce dispositif détecteur fonctionne de manière sous-optimale et repose soit sur une égalisation linéaire soit sur une égalisation à rétroaction de décision, que le dispositif détecteur contient un filtre de décorrélation adapté au signal, que le principe de fonctionnement du dispositif détecteur, à la condition que le vecteur de signal reçu $\underline{e}$ défini par $\underline{e} = (\underline{e}^{1(\mathsf{T})}, \underline{e}^{2(\mathsf{T})}, ..., \underline{e}^{Ka(\mathsf{T})})^{\mathsf{T}} = (\underline{e}1, \underline{e}2, ..., \underline{e}_{Ka.(N.Q + W -1)})^{\mathsf{T}} = \underline{A} \, \underline{d} + \underline{n}$, $K_a$, N, Q, W $\in$ IN, soit reconnu dans le récepteur, est donné par un ensemble d'équations $\underline{S} \, \underline{d} = \underline{M} \, \underline{e}$, $\underline{S} = (\underline{S}_{i,j})$, i, j = 1 ... K $\cdot$ N, étant une matrice carrée avec K $\cdot$ N lignes et avec K $\cdot$ N colonnes, $\underline{M} = (\underline{M}_{i,j}), i = 1... K \cdot N, j = 1 ... N \cdot Q + W - 1$, étant une matrice estimée de dimension K $\cdot$ N x $K_a \cdot (N \cdot Q + W - 1)$ et $\underline{d} = \left( d_1, d_2...d_{K \cdot N} \right)^{\mathsf{T}}$ étant la valeur estimée du vecteur de données $\underline{d}$ défini dans l'équation pour le vecteur de signal reçu $\underline{e}$.

**5.** Système selon la revendication 4,
caractérisé par le fait qu'il est prévu comme dispositif détecteur CDMA un égaliseur de bloc de données linéaire avec étage de quantification du côté aval, qu'il est déterminé dans l'égaliseur de bloc des valeurs estimées continues des symboles de données qui sont regroupées en vecteurs et que des valeurs estimées discrètes des symboles de données sont ensuite obtenues dans l'étage de quantification par quantification des valeurs estimées continues.

**6.** Système selon la revendication 5,
caractérisé par le fait que l'éga·liseur de bloc linéaire dit Zéro-Forcing est utilisé comme égaliseur de bloc linéaire.

**7.** Système selon la revendication 5,
caractérisé par le fait que l'égaliseur de bloc dit Minimum-Mean-Square-Error est utilisé comme égaliseur de bloc linéaire.

**8.** Système selon la revendication 4,
caractérisé par le fait qu'il est prévu comme dispositif détecteur CDMA un égaliseur de bloc de données avec rétroaction quantifiée.

**9.** Système selon la revendication 8,
caractérisé par le fait qu'il est prévu comme égaliseur de bloc de données un égaliseur de bloc dit Zéro-Forcing avec rétroaction quantifiée.

**10.** Système selon la revendication 8,
caractérisé par le fait qu'il est prévu comme égaliseur de bloc de données un égaliseur de bloc dit Minimum-Mean-Square-Error avec rétroaction quantifiée.

**11.** Système selon l'une des revendications précédentes,
caractérisé par le fait qu'il est prévu du côté récepteur un processeur de signal numérique qui contient le dispositif détecteur CDMA.

**12.** Système selon la revendication 11,
caractérisé par le fait que le processeur de signal contient encore des dispositifs d'estimation de canaux.

**13.** Système selon la revendication 11 ou 12,
caractérisé par le fait qu'il est prévu comme processeur de signal un microprocesseur.

**14.** Système selon l'une des revendications précédentes,
caractérisé par une utilisation dans le cadre d'un procédé hybride d'accès multiple qui consiste en une combinaison de multiplexage par répartition de code avec procédés à porteuses multiples, multiplexage par répartition de fréquence et multiplexage par répartition de temps.

**15.** Système selon l'une des revendications précédentes,
caractérisé par le fait qu'une diversité d'antennes est prévue du côté émetteur.

**16.** Système selon l'une des revendications précédentes,
caractérisé par le fait qu'il est prévu une diversité adaptative avec antennes directives.

**17.** Système selon l'une des revendications 1 à 15,
caractérisé par le fait qu'il est prévu une diversité non adaptative avec antennes directives.

**18.** Système selon l'une des revendications précédentes,
caractérisé par une extension de la modulation de données jusqu'à présent linéaire à une modulation de données non linéaire.

**19.** Système selon l'une des revendications précédentes,
caractérisé par une extension de la modulation par étalement de spectre jusqu'à présent linéaire à une modulation par étalement de spectre non linéaire.

**20.** Système selon l'une des revendications précédentes,
caractérisé par un étalement de code avec séquences orthogonales, soit dans la section montante, soit dans la section descendante, soit dans les deux directions.

21. Système selon l'une des revendications 1 à 19,
    caractérisé par un étalement de code avec séquences non orthogonales, soit dans la section montante, soit dans la section descendante, soit dans les deux directions.

22. Système selon l'une des revendications précédentes,
    caractérisé par une utilisation de séquences d'étalement binaires.

23. Système selon l'une des revendications 1 à 21,
    caractérisé par une utilisation de séquences d'étalement non binaires, par exemple de séquences d'étalement quaternaires.

24. Système selon l'une des revendications précédentes,
    caractérisé par une application au domaine de la radiocommunication mobile.

25. Système selon l'une des revendications 1 à 23,
    caractérisé par une application au domaine du faisceau hertzien.

26. Système selon l'une des revendications 1 à 23,
    caractérisé par une application au domaine des télécommunications par satellites.

27. Système selon l'une des revendications 1 à 23,
    caractérisé par une application au domaine de la radiocommunication maritime.

28. Système selon l'une des revendications 1 à 23,
    caractérisé par une application au domaine du téléphone sans fil.

29. Système selon l'une des revendications 1 à 23,
    caractérisé par une application au domaine de la télévision par câble.

30. Système selon l'une des revendications 1 à 23,
    caractérisé par une application au domaine de la radiocommunication sous-marine.

$\underline{d}^{(1)}$   $M_1$   $A_1$   $\underline{h}^{(1,1)}{}_{(\tau, t)}$   $E_1$   $\hat{\underline{d}}^{(1)}$

$\underline{h}^{(K,1)}{}_{(\tau, t)}$

$\underline{h}^{(1, K_a)}{}_{(\tau, t)}$

BS

$\underline{d}^{(K)}$   $M_K$   $A_K$   $E_{Ka}$

$\underline{h}^{(K, K_a)}{}_{(\tau, t)}$   $\hat{\underline{d}}^{(K)}$